# EUROPEAN PATENT APPLICATION

(11) **EP 2 653 972 A1**
(43) Date of publication of application: **23.10.2013**
(21) Application number: 11869465.2
(22) Date of filing: 14.07.2011
(51) Int. Cl.: G06F 12/00

(54) **JOURNAL MANAGEMENT SYSTEM**

(71) Applicant: Mitsubishi Electric Corporation, Tokyo 100-8310 (JP)
(72) Inventor: KANEKI, Yusuke, Tokyo 100-8310 (JP)
(74) Representative: Pfenning, Meinig & Partner GbR
(86) International application number: PCT/JP2011/066040
(87) International publication number: WO 2013/008327

(57) **Abstract**

A journal output device 100 generates a journal describing a processing definition ID of a processing definition for which a processing is in progress and indicating a progress status of the processing in an application 300, and writes a journal 600 generated, in a journal file 400 (500). When a write destination journal file is to be changed among journals having a common processing definition ID, the journal output device 100 describes a write destination change notice in a journal. A recovery device 200 separates the processing definition ID of the journal describing the write destination change notice, from another processing definition ID as a write destination change notice, and concatenates two or more journal arrays having a common write destination change incidence ID, to guarantee the sequential order. In case of the write destination change incidence ID, the recovery device 200 analyzes a journal array which has been sequential-order-guaranteed. Regarding other processing definition IDs, the recovery device 200 analyzes the journal array without sequential order guarantee.

## Description

### Technical Field

The present invention to a technique for managing a journal which indicates a progress status of a processing in an application program (to be merely referred to as an application as well hereinafter).

### Background Art

A journal method which resumes a processing suspended due to an abnormal end is available so that the reliability of an application program is improved.

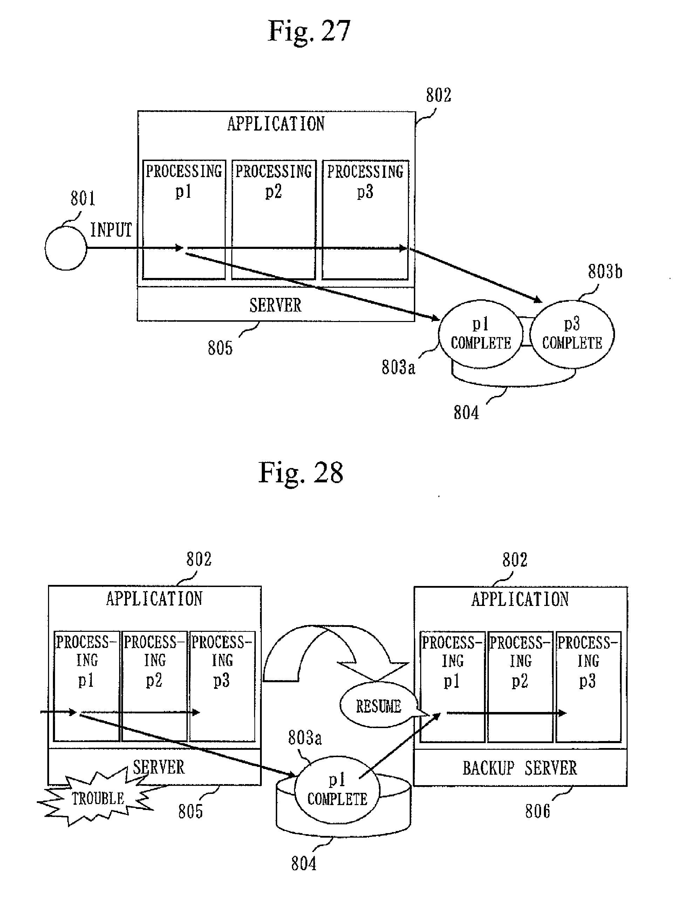

Figs. 27 and 28 are diagrams for explaining the journal method.
Fig. 27 shows an operation example in a normal state, and Fig. 28 shows an operation example in a trouble/recovery state.

As shown in Fig. 27, according to the journal method, while an application 802 formed of a plurality of processings runs in a server device 805, when a certain processing is completed, the status of the application at that time point and the completion of this processing are saved as a journal 803 in a disk (a saving destination file will be referred to as a journal file).
As shown in Fig. 28, assume that the application ends abnormally, that the system is switched by cluster middleware or the like, and that the application is restarted in a backup server device 806. In this case, the identifier of the processing completed immediately before the abnormal end and the status of the application at that time are read from the journal 803 saved in the disk. The application is resumed with a processing next to the processing completed immediately before the abnormal end.
Resumption of the suspended processing is realized by this operation.

According to the journal method, the progress of the processing of the application needs to match the journal on the disk. Hence, the application operates in such a way to execute the next processing after the journal is completely written on the disk.
Accordingly, the journal write performance largely influences the performance of the application.
In the recovery, the written journal is read from the disk and analyzed. The processing completed immediately before the abnormal end is extracted. Then, the application is resumed with the processing next to the processing completed immediately before the abnormal end.
In general, in order to keep the sequential order of the processing, a new processing need be executed after the suspended processing is resumed. Hence, the recovery is completed after the resumption of the suspended processing is completed.
Therefore, the time taken to read the journal from the disk and the journal analysis time largely influence the recovery time.
Because of the above, in the journal method, in order to improve the reliability (reduce the recovery time) while minimizing the influence to the application performance, an improvement in the journal write performance, reduction in the journal file read time, and reduction in the processing time taken until the recovery preparation are the issues to be solved.

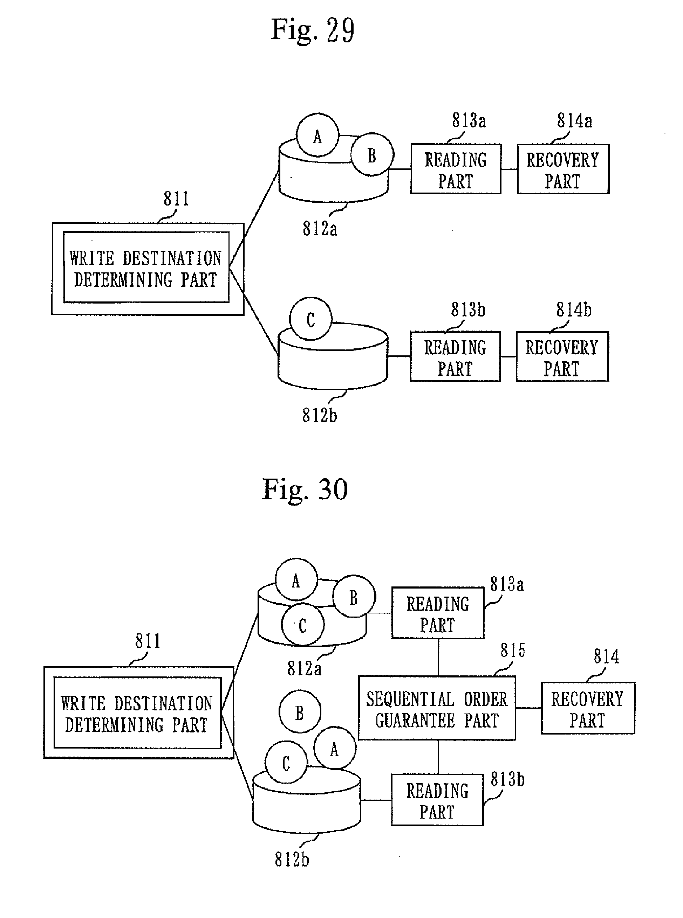

Patent Literature 1 discloses a method of improving the write performance and reducing the read time by preparing a plurality of journal files, as shown in Fig. 29.
In Patent Literature 1, the processing procedures of the application are classified into a plurality of processing types (A, B, and C in Fig. 29). Writing procedures into journal files fixed for the respective processing types enable the disk write operations to be performed in a parallel manner, so that the journal write performance is improved.
In Patent Literature 1, the processing types are determined such that the recovery is conducted independently for each processing type. The write destination is determined such that journals of a certain processing type exist in only the fixed journal file.
More specifically, a write destination determining part 811 determines a journal file 812a as the write destination of the journals of the processing type A and the journals of the processing type B, and a journal file 812b as the write destination of the journals of the processing type C.
A reading part 813a reads the journals of the processing type A and the journals of the processing type B from the journal file 812a. A recovery part 814a recovers the processings of the processing type A and processing type B. A reading part 813b reads the journals of the processing type C from the journal file 812b. A recovery part 814b recovers the processings of the processing type C.
Consequently, by reading a certain journal file, the journals of the processing type included in the journal file are obtained, and the processing of this processing type can be resumed.
As a result, the processings are sequentially resumed starting from the processing of the processing types included in the journal file that is read, so that the recovery procedures are performed in a parallel manner and the recovery time is reduced.

With the method of Patent Literature 1, however, as the journal file being the write destination is fixed for each processing type, the relation between the processing type and the write destination journal file cannot be changed.
For example, assume that the processing characteristic differs among the processing types, that the processing types A and B are transaction-system processings where the processing lot is small and the number of processings is large, and that the processing type C is a batch-system processing where the processing lot is large and the number of processings is small.
A journal of a transaction-system processing has a small size and requires a short disk write time.
A journal of a batch-system processing has a large size and requires a long disk write time.
Assume a configuration where journals of the processing types A and B are written into one journal file and the journals of the processing type C are written into another journal file. When the processing type A switches to a batch-system processing for a certain period of time, the write performance of the journals of the processing type B becomes low because it is adversely influenced by the write performance of the journals of the processing type A.
In this case, the overall write performance balance need be optimized by directing the journals of the processing type A to the write destination journal file of the processing type C which is also a batch-system processing.
The method of Patent Literature 1, however, has a problem that since the processing types and the journal files are fixed, switching among journal files cannot be coped with.

Patent Literature 2 discloses a method as shown in Fig. 30 where the journal file is not specified by the processing types, but journals are written into a plurality of journal files. A sequential order guarantee part 815 classifies the journals stored in a journal file 812a and a journal file 812b according to the processing types, so that the sequential order is guaranteed.
With this method, however, although an improvement in the journal write performance and the journal file change can be realized, the journals are dispersed among all the journal files, and all the journal files need be read in the recovery. Therefore, the method of Patent Literature 2 has a problem that the read time cannot be reduced by reading the journal files in a parallel manner.

### Citation List

### Patent Literature

Patent Literature 1:JP 5-225024
Patent Literature 2: JP 10-228404

### Summary of Invention

### Technical Problem

As described above, Patent Literatures 1 and 2 have the problems that they cannot satisfy all of the improvement in write performance, the reduction in the read time and recovery processing time, and the change of the write destination journal file, by preparing a plurality of journal files.

The present invention has been made in view of the above problems, and has as its major object to realize all of the improvement in write performance, the reduction in the read time and recovery processing time, and the change of the write destination journal file.

### Solution to Problem

A journal management system according to the present invention includes:
a journal generating part which generates data indicating a progress status of a processing in an application program and describing a processing procedure ID (Identifier) of a processing procedure of a processing in progress, as a journal, the application program including a plurality of types of processing procedures;
a write destination determining part which determines, for each journal generated, a write destination journal file to serve as a write destination of a journal from among a plurality of journal files;
a write destination change notifying part which, when a write destination journal file is to be changed among journals having a common processing procedure ID, describes a write destination change notice notifying change of the write destination journal file, in a journal generated before change of the write destination journal file and a journal generated after change of the write destination journal file;
a writing part which writes the journal into the write destination journal file determined by the write destination determining part;
a plurality of journal reading/classifying parts each of which is correlated to a journal file, reads the journal from the journal file correlated, classifies the journal that is read, according to the processing procedure ID, generates a journal array using not less than one journal classified, for each processing procedure ID, and when the journal that is read includes a journal describing the write destination change notice, separates a processing procedure ID described in the journal describing the write destination change notice, from other processing procedures ID as a write destination change incidence ID; and
a journal concatenating part which inputs a journal array generated for the write destination change incidence ID from at least one of the journal reading/classifying parts, and concatenates not less than two journal arrays generated for a common write destination change incidence ID.

### Advantageous Effects of Invention

According to the present invention, when the write destination journal file is to be changed, a write destination change notice is described in a journal. The processing procedure ID of the journal describing the write destination change notice is separated from other processing procedure IDs as a write destination change incidence ID. Two or more journal arrays generated for a common write destination change incidence ID are concatenated.
Therefore, the journal files need not be fixed but can be changed, so that a journal write performance can be improved.
A journal for which a write destination journal file is changed can be detected from the write destination change notice. Hence, journal files can be read in a parallel manner, reducing the read time.

### Brief Description of Drawings

[Fig. 1] is a diagram for describing a configuration example of a journal management system according to Embodiment 1.
[Fig. 2] is a diagram for explaining a configuration example of a journal according to Embodiment 1.
[Fig. 3] is a diagram for explaining a configuration example of a write destination determination table according to Embodiment 1.
[Fig. 4] is a diagram for explaining a configuration example of a write destination holding table according to Embodiment 1.
[Fig. 5] is a flowchart for explaining a normal-state flow according to Embodiment 1.
[Fig. 6] is a flowchart for explaining a recovery-state flow according to Embodiment 1.
[Fig. 7] is a flowchart for explaining the recovery-state flow according to Embodiment 1.
[Fig. 8] is a flowchart for explaining the recovery-state flow according to Embodiment 1.
[Fig. 9] is a flowchart for explaining the recovery-state flow according to Embodiment 1.
[Fig. 10] is a flowchart for explaining the recovery-state flow according to Embodiment 1.
[Fig. 11] is a flowchart for explaining the recovery-state flow according to Embodiment 1.
[Fig. 12] is a diagram for explaining a processing of generating a journal array according to Embodiment 1.
[Fig. 13] is a diagram for explaining a configuration example of a journal management system according to Embodiment 2.
[Fig. 14] is a diagram for explaining journal array patterns according to Embodiment 2.
[Fig. 15] is a flowchart for explaining a normal-state flow according to Embodiment 2.
[Fig. 16] is a diagram for explaining a write destination change notice according to Embodiment 2.
[Fig. 17] is a diagram for explaining a case where a plurality of journal array patterns are generated according to Embodiment 2.
[Fig. 18] is a flowchart for explaining a recovery-state flow according to Embodiment 2.
[Fig. 19] is a flowchart for explaining the recovery-state flow according to Embodiment 2.
[Fig. 20] is a flowchart for explaining the recovery-state flow according to Embodiment 2.
[Fig. 21] is a diagram for explaining a configuration example of a journal management system according to Embodiment 3.
[Fig. 22] is a diagram for explaining sequential order wait exclusion patterns according to Embodiment 3.
[Fig.23] is a diagram for explaining an example of sequential order wait exclusion pattern 1 according to Embodiment 3.
[Fig. 24] is a diagram for explaining an example of sequential order wait exclusion pattern 2 according to Embodiment 3.
[Fig. 25] is a diagram for explaining an example of sequential order wait exclusion pattern 3 according to Embodiment 3.
[Fig. 26] is a flowchart for explaining a recovery-state flow according to Embodiment 3.
[Fig. 27] is a diagram for explaining a journal method.
[Fig. 28] is a diagram for explaining a journal method.
[Fig. 29] is a diagram for explaining a related art.
[Fig. 30] is a diagram for explaining a related art.
[Fig. 31] is a diagram for explaining a configuration example of a journal.
[Fig. 32] is a diagram for explaining processing definitions.
[Fig. 33] is a diagram for explaining processing IDs.
[Fig. 34] is a diagram for explaining processing stages.
[Fig. 35] is a diagram for explaining processing branches.
[Fig. 36] is a diagram for explaining a configuration example of an application.
[Fig. 37] is a diagram for explaining a configuration example of a journal file as applied to an application.
[Fig. 38] is a diagram for explaining a configuration example of hardware of a journal output device and recovery device according to Embodiments 1 to 3.

### Description of Embodiments

### Embodiment 1.

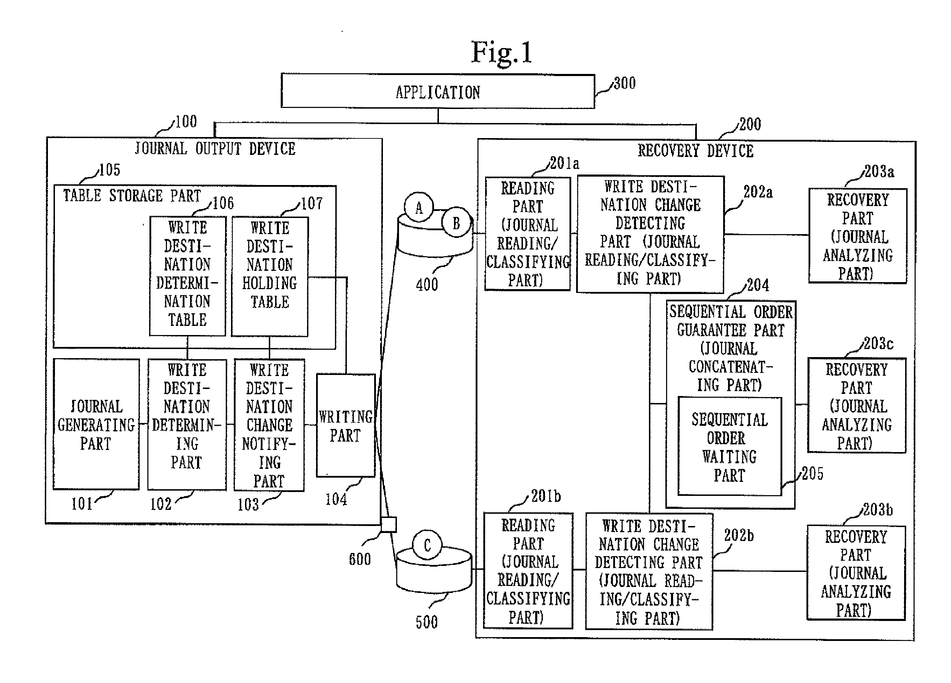

Fig. 1 is a diagram for describing a configuration example of a journal management system according to Embodiment 1.

The journal management system includes a journal output device 100 and a recovery device 200.
The journal output device 100 corresponds to the server device 805 shown in Figs. 27 and 28.
Namely, in the normal state, the journal output device 100 executes an application 300, generates a journal 600 which is data indicating the progress of the processing of the application 300, and writes the generated journal 600 to a journal file 400 or a journal file 500.
The recovery device 200 corresponds to the backup server device 806 shown in Fig. 28.
Namely, when the application 300 ends abnormally, the recovery device 200 reads the journal 600 from the journal file 400 or journal file 500, analyzes the readout journal 600, and resumes the application 300 with a step next to a step suspended by the abnormal end.
The application 300 may be stored in each storage area of the journal output device 100 and recovery device 200, or in a shared server device or the like shared by the journal output device 100 and the recovery device 200.

In the example of Fig. 1, the journal output device 100 writes a journal 600 generated in execution of the processing of a processing type A and a journal 600 generated in execution of the processing of a processing type B, into the journal file 400, and writes a journal 600 generated in execution of the processing of a processing type C into the journal file 500.
The journal file which is the write destination of the journal 600 may, however, change, as will be described later.
The journal file 400 and the journal file 500 are storage areas (a magnetic disk or the like) which both the journal output device 100 and the recovery device 200 can access.

In the journal output device 100, a journal generating part 101 generates the journal 600.
The journal 600 will be described later in detail.

A write destination determining part 102 determines a journal file which is the write destination of the journal 600 generated by the journal generating part 101.
The journal file determined by the write destination determining part 102 as the write destination of the journal 600 will be called a write destination journal file.

When the write destination journal file is to be changed among journals having a common processing definition ID (Identifier), a write destination change notifying part 103 describes a write destination change notice which notifies change of the write destination journal file, in the last journal 600 before change of the write destination journal file and in the first journal 600 after change of the write destination journal file.
The processing definition ID and the write destination change notice will be described later in detail.

A writing part 104 writes the journal 600 into the write destination journal file determined by the write destination determining part 102.

A table storage part 105 stores a write destination determination table 106 and a write destination holding table 107.
The write destination determination table 106 is information indicating the journal file specified as the write destination journal file of the journal 600.
The write destination holding table 107 is information indicating the journal file into which the journal 600 is actually written.
The write destination determination table 106 and the write destination holding table 107 will be described later in detail.

In the recovery device 200, a reading part 201 a is correlated with the journal file 400 and reads the journals 600 from the journal file 400.
A reading part 201b is correlated with the journal file 500 and reads the journals 600 from the journal file 500.
If the reading part 201 a and the reading part 201b need not be distinguished from each other, both will be expressed as a reading part 201.

A write destination change detecting part 202a classifies the journals 600 read by the reading part 201 a from the journal file 400, according to the processing definition IDs. For each processing destination ID, the write destination change detecting part 202a generates a journal array using one or more journals 600 classified.
If the journals 600 which are read include a journal 600 describing a write destination change notice, the write destination change detecting part 202a separates the processing definition ID described in the journal 600 describing the write destination change notice, from other processing definition IDs, as a write destination change incidence ID.
Furthermore, the write destination change detecting part 202a outputs a journal array generated for the write destination change incidence ID to a sequential order guarantee part 204, and outputs a journal array generated for a processing definition ID other than the write destination change incidence ID to a recovery part 203 a.
A write destination change detecting part 202b classifies the journals 600 read by the reading part 201 b from the journal file 500, according to the processing definition IDs. For each processing definition ID, the write destination change detecting part 202b generates a journal array using one or more journals 600 classified.
If the journals 600 which are read include a journal 600 describing a write destination change notice, the write destination change detecting part 202b separates the processing definition ID described in the journal 600 describing the write destination change notice, from other processing definition IDs, as a write destination change incidence ID.
Furthermore, the write destination change detecting part 202b outputs a journal array generated for the write destination change incidence ID to the sequential order guarantee part 204, and outputs a journal array generated for a processing definition ID other than the write destination change incidence ID to the recovery part 203b.
If the write destination change detecting part 202a and the write destination change detecting part 202b need not be distinguished from each other, both will be expressed as a write destination change detecting part 202.

The reading part 201 a and write destination change detecting part 202a, and the reading part 201 b and write destination change detecting part 202b are respectively examples of a journal reading/classifying part.

The recovery part 203a inputs the journal array generated for the processing definition ID other than the write destination change incidence ID, from the write destination change detecting part 202a, and analyzes the inputted journal array to recover the application 300.
A recovery part 203b inputs the journal array generated for the processing definition ID other than the write destination change incidence ID, from the write destination change detecting part 202b, and analyzes the inputted journal array to recover the application 300.
A recovery part 203c inputs a journal array generated for the write destination change incidence ID with concatenation by the sequential order guarantee part 204, from the sequential order guarantee part 204, and analyzes the inputted journal array to recover the application 300.
The recovery part 203a, the recovery part 203b, and the recovery part 203c are examples of a journal analyzing part.
If the recovery part 203 a, the recovery part 203b, and the recovery part 203c need not be distinguished from each other, all will be expressed as a recovery part 203.

The sequential order guarantee part 204 has a sequential order waiting part 205 and manages the sequential order waiting part 205.
The sequential order guarantee part 204 inputs the journal array generated for the write destination change incidence ID, from at least either one of the write destination change detecting part 202a and the write destination change detecting part 202b, and passes the inputted journal array to the sequential order waiting part 205.
The sequential order waiting part 205 concatenates two or more journal arrays generated for the same write destination change incidence ID.
The sequential order waiting part 205 is provided for each processing definition ID.
The sequential order guarantee part 204 including the sequential order waiting part 205 is an example of a journal concatenating part.

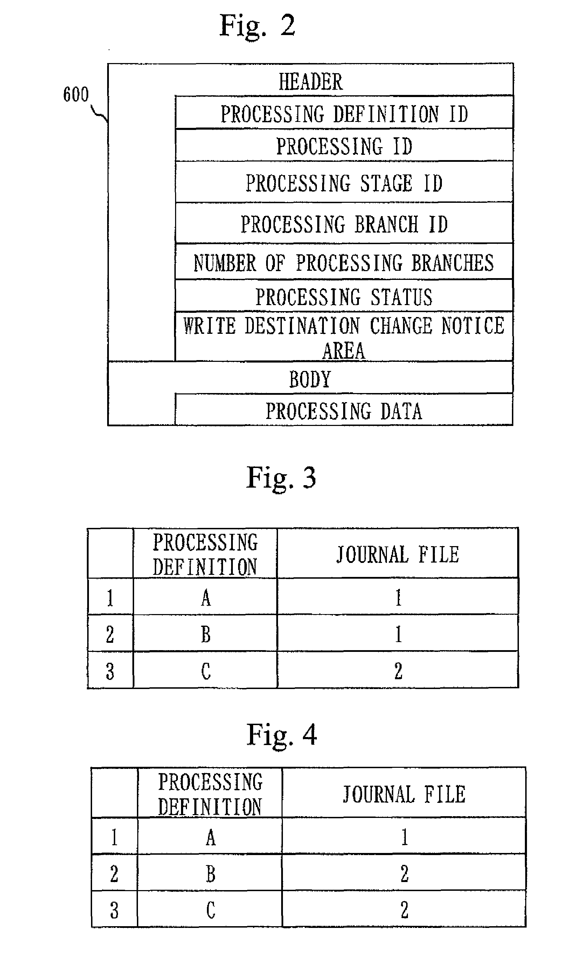

Fig. 2 shows a configuration example of the journal 600.

The journal 600 is formed of a header and a body.
The header is formed of a processing definition ID, a processing ID, a processing stage ID, a processing branch ID, the number of processing branches, a processing status, and a write destination change notice area.
The body is formed of processing data.
The write destination change notice area is an area in which the write destination change notice notifying the change of the write destination journal file, is described.
The processing definition ID, the processing ID, the processing stage ID, the processing branch ID, the number of processing branches, the processing status, and the processing data will be described later in detail.

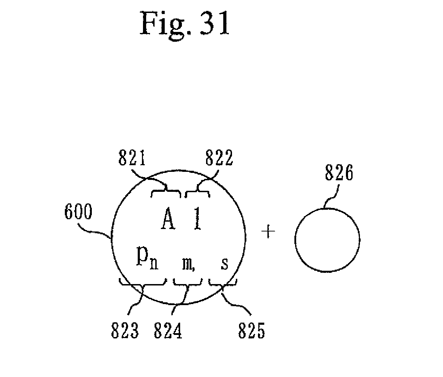

In this embodiment, the journal 600 is expressed as in Fig. 31 as well.
According to the expression method of Fig. 31, an element denoted by reference numeral 821 represents "processing definition ID"; an element denoted by reference numeral 822 represents "processing ID"; an element denoted by reference numeral 823 represents "processing stage ID"; an element denoted by reference numeral 824 represents "processing branch ID"; an element denoted by reference numeral 825 represents "processing status"; and an element denoted by reference numeral 826 represents "processing data".
Namely, a processing definition ID 821, a processing ID 822, a processing stage ID 823, a processing branch ID 824, a processing status 825, and processing data 826 in Fig. 31 respectively correspond to the processing definition ID, the processing ID, the processing stage ID, the processing branch ID, the processing status, and the processing data in Fig. 2.
According to the expression method of Fig. 31, the number of processing branches and the write destination change notice area are not indicated.
The journal 600 will be expressed hereinafter using the expression method of Fig. 2 and the expression method of Fig. 31.

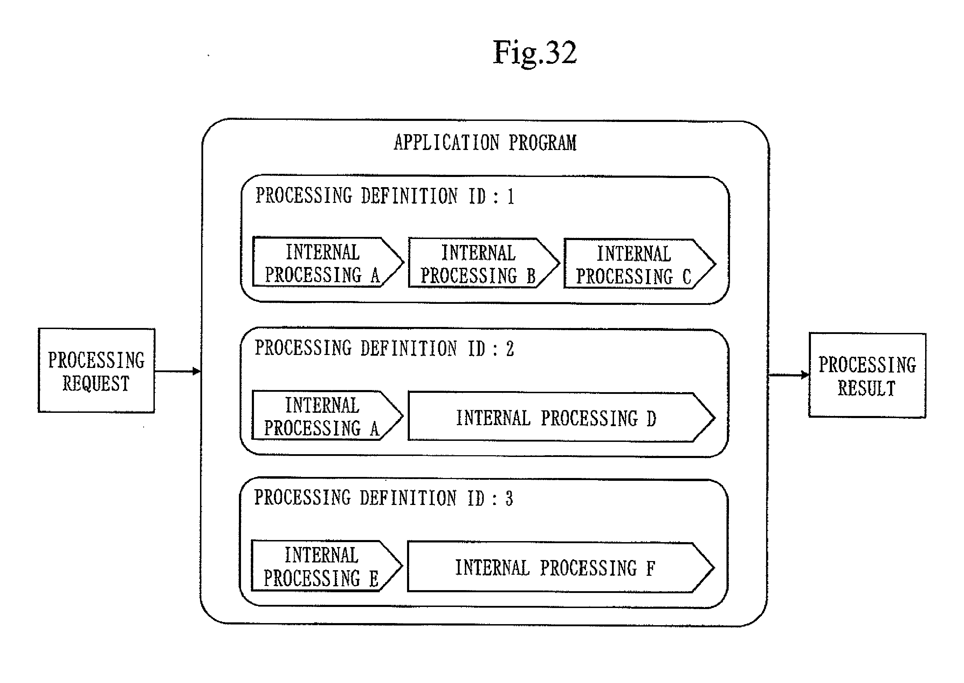

As shown in Fig. 32, a series of processings from input to output of an application program will be referred to as the processing definition.
By executing the processing definition, a predetermined function provided to the application program is implemented.
Namely, the processing definition is a processing procedure to implement the function provided to the application program.
An identifier to identify each processing definition is referred to as the processing definition ID 821.
In other words, the processing definition ID is an identifier to identify the processing procedure, and is an example of the processing procedure ID.
Each processing definition is formed of a plurality of internal processings (steps in the processing procedure).
The processing definition is a synonym for "processing type" referred to in the explanation of Patent Literatures 1 and 2.

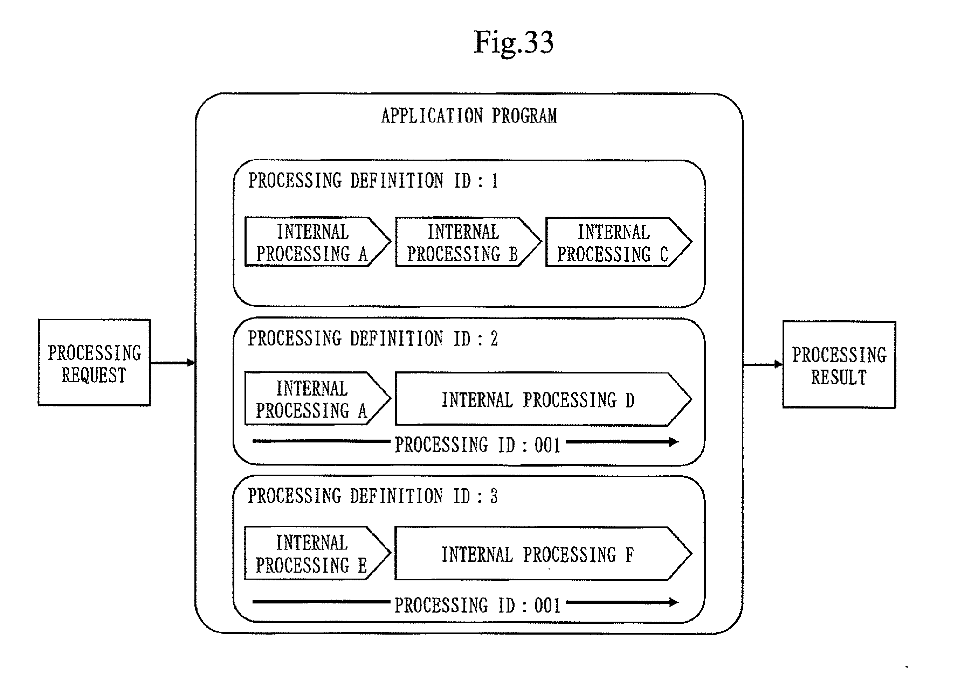

In the application program, each processing definition can be executed repeatedly.
That is, a plurality of instances (to be referred to as processing instances) can be generated for the same processing definition.
An identifier to identify each processing instance will be referred to as the processing ID 822 or a processing instance ID.
As shown in Fig. 33, the processing ID 822 (processing instance ID) is a serial number assigned to each processing definition.
As a processing request is issued from the outside, the processing ID 822 (processing instance ID) increments.

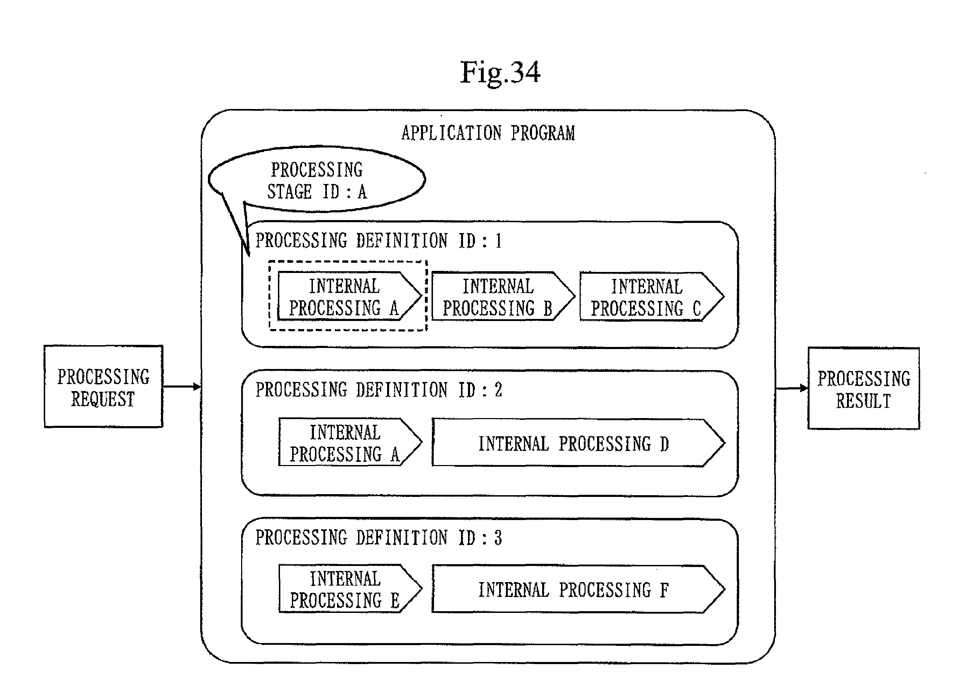

Each processing definition is a set of internal processings. As shown in Fig. 34, the phase of each internal processing will be referred to as a processing stage.
Namely, the processing definition is formed of a plurality of processing stages.
An identifier to identify each processing stage will be referred to as the processing stage ID 823.

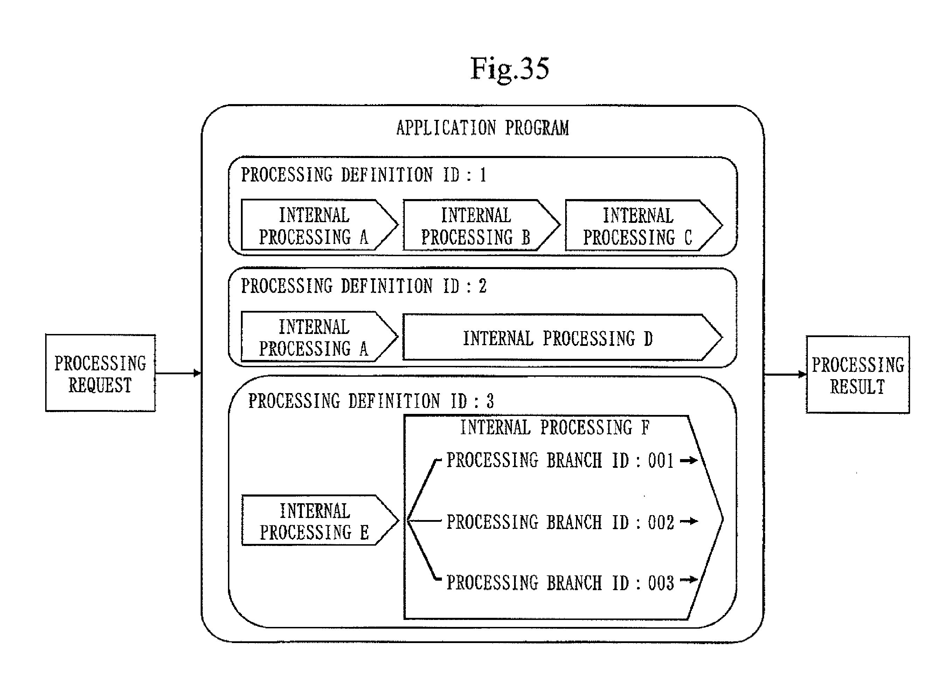

As shown in Fig. 35, when the processing is divided into a plurality of processings (steps) in the same processing stage because, for example, the processing is to be performed in a parallel manner, each processing (step) will be referred to as a processing branch.
An identifier to identify each processing branch will be referred to as the processing branch ID 824.
How many processing branches exist will be referred to as the number of processing branches.

The processing status 825 indicates the status of the processing such as completion or incompletion.
An identifier to identify the processing status 825 will be referred to as a status ID as well.

The processing data 826 is data required in the processing.
The processing data 826 needs to be data having a sufficient information amount to resume the current processing stage or the next processing stage.

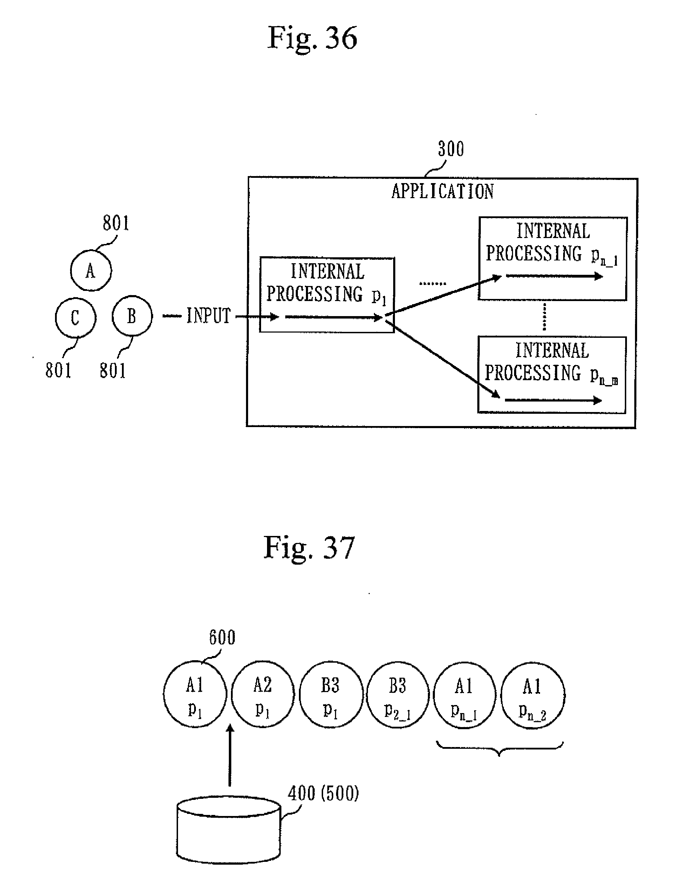

As shown in Fig. 36, the application 300 receives input data 801 from the outside and executes a plurality of internal processings on the input data 801.
When all of internal processings P_{n_1} to P_{n_m} which are final steps after branching are completed, the processing of the application 300 ends.
The application 300, the internal processings, and the input data 801 have following relations.
(1) The application 300 is formed of a plurality of internal processings and has a plurality of final processings.
(2) The input data are classified into several types (types A, B, and C in Fig. 36), and the internal processing differs among the types.
(3) The amount of flow varies and fluctuates largely even among the input data 801 of the same type (transaction-system processings and batch-system processings coexist).

Based on the above explanation, Fig. 37 shows a configuration of a journal file of a case where the journal method is applied to the application 300.
In this case, the number of processing branches is 2.
Referring to Fig. 37, "A1" represents "processing definition ID: A" and "processing ID: 1 ", "A2" represents "processing definition ID: A" and "processing ID: 2", and "B3" represents "processing definition ID: B" and "processing ID: 3".
Also, "p₁" represents "processing stage ID: 1" (with no processing branch), "p_{2 1}" represents "processing stage ID: 2" and "processing branch ID: 1", "p_{n 1}" represents "processing stage ID: n" and "processing branch ID: 1", and "p_{n 2}" represents "processing stage ID: n" and "processing branch ID: 2".
In Fig. 37, the processing status 825 and the processing data 826 shown in Fig. 31 are not indicated.

As with "A1" and "B3", one journal file may store journals 600 of a plurality of types of processing definitions.
Among the same processing stages of the same processing definition, the sequential order according to the processing ID order is guaranteed, as is seen from A1p₁, A2p₁,..., Alp_{n_1}. Hence, A2p₁ always appears after A1p₁.
Since the internal processings requested from the outside are executed sequentially in each processing stage, the sequential order according to the processing ID order is not always obtained, therefore A2p₁ may be outputted before A1p_{n_1}.
In the example of Fig. 37, since the number of processing branches is 2, if the journal Alp₁ indicating completion of the initial step (processing stage) and journals A1p_{n_1} and A1p_{n_2} both indicating completion of the final stage are available, the processing instance of A1 is completed.
At this time, a journal such as A1p₁ having the initial processing stage ID is referred to as a start journal, and a journal such as A1p_{n_1} or Alp_{n_2} having the final processing stage ID is referred to as a completion journal.

Fig. 3 shows an example of the write destination determination table 106 stored in the table storage part 105.
The write destination determination table 106 is a table that correlates the processing definitions ID with the write destination journal files.
To change the write destination journal file, the values of the write destination determination table 106 are changed.
For example, based on an instruction from the application 300 or from an OS (Operating System) that manages the application 300, the write destination determining part 102 changes the values of the write destination determination table 106.

Fig. 4 shows an example of the write destination holding table 107 stored in the table storage part 105.
The write destination holding table 107 is a table that correlates the processing definitions ID with write destination journal files to which journals are currently being written.
The write destination change notifying part 103 compares the values of the write destination determination table 106 with the values of the write destination holding table 107 to detect a change of the write destination journal file.

According to the journal management system of this embodiment, a plurality of journal files are prepared. The journal is written in the journal file determined for each processing type. If the write destination journal file is changed, the change of the write destination journal file is set in the journal.
At the time of recovery, read/recovery is performed for respective journal files. In recovery, the sequential order is guaranteed only for a type having a journal for which the write destination journal file is changed.
With this measure, the improvement in write performance using a plurality of journal files, the reduction in the read time and recovery processing time, and the change of the write destination journal file are all realized.

The operation of the journal management system according to this embodiment will now be described.

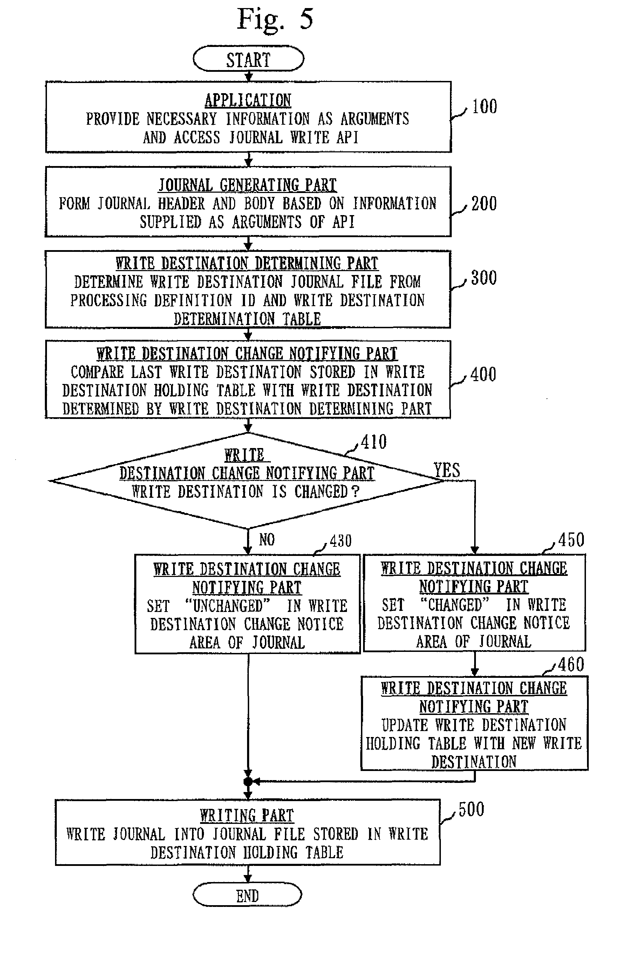

A normal-state operation will be explained referring to the flow of Fig. 5.

First, in step 100, the application 300 determines the processing definition ID, the processing ID, the processing stage ID, the processing branch ID, the number of processing branches, and the processing data. The application 300 calls the journal output device 100 via an API (Application Programming Interface), and supplies the processing definition ID, the processing ID, the processing stage ID, the processing branch ID, the number of processing branches, and the processing data, as arguments to the journal output device 100. The flow proceeds to step 200.
The processing data should be data necessary for the application 300 to start the processing with the next processing stage.

In step 200, the journal generating part 101 forms a header from the processing definition ID, the processing ID, the stage ID, the processing branch ID, and the number of processing branches which are supplied as the arguments, and forms a body from the processing data supplied as the arguments. The flow proceeds to step 300.
The header and body combined is called a journal 600.

In step 300, the write destination determining part 102 compares the processing definition ID of the journal 600 generated in step 200 with the write destination determination table 106 (Fig. 3), and determines the write destination journal file of the journal 600 generated in step 200. The flow proceeds to step 400.
For example, if the processing definition ID of the journal 600 generated in step 200 is "A", the write destination determining part 102 specifies a journal file "1" as the write destination journal file according to the write destination determination table 106 shown in Fig. 3.
Also, in step 300, the write destination determining part 102 checks whether or not the write destination journal file for the next journal 600 (the next journal 600 having the same processing definition ID) is to be changed. When the write destination journal file is to be changed, the write destination determining part 102 changes the values of the write destination determination table 106.
The write destination journal file after the change is applied starting from the next journal 600.
For example, assume a case where the journals 600 are generated in the order indicated in Fig. 37.
In this case, if the values of the write destination determination table 106 at the start of step 300 for the journal A1p₁ are as shown in Fig. 3, the write destination journal file for the journal A1p₁ is the journal file "1".
When the write destination determining part 102 changes the write destination determination table 106 so that the write destination journal file for "processing destination ID: A" becomes "journal file: 2", then in step 300 for the next journal file A2p₁ having the same processing definition ID, the write destination determining part 102 specifies a journal file "2" as the write destination journal file.

In step 400, the write destination change notifying part 103 acquires the values of the write destination journal file to which the journals 600 have been written until now, from the processing definition ID of the journal 600 generated in step 200 and the write destination holding table 107 (Fig. 4).
Also, the write destination change notifying part 103 compares the values of the write destination journal file acquired from the write destination holding table 107 with the values of the write destination journal file of the write destination determination table 106 (Fig. 3). The flow proceeds to step 410.

In step 410, if the write destination journal file has been changed (a case where the values of the write destination journal file of the write destination holding table 107 and the values of the write destination journal file of the write destination determination table 106 are different), the flow proceeds to step 450; if not changed, to step 430.

In step 430, the write destination change notifying part 103 sets "unchanged" in the write destination change notice area of the journal header. The flow proceeds to step 500.

In step 450, the write destination change notifying part 103 sets "changed" in the write destination change notice area of the journal header.
If "YES" decision (the decision that the write destination journal file is changed) in step 410 is made for the first time, the flow proceeds to step 500.
If "YES" decision (the decision that the write destination journal file is changed) in step 410 is made for the second time, then in step 460, the write destination change notifying part 103 writes the values of the write destination journal file of the write destination determination table 106 into the write destination holding table 107, to update the write destination holding table 107. The flow proceeds to step 500.

In step 500, the writing part 104 writes the journal 600 into the write destination journal file described on the write destination holding table 107.
When the write is completed, the writing part 104 returns the processing to the application 300.

For example, assume a case where the journals 600 are generated in the sequential order indicated in Fig. 37.
In step 300, assume that after the journal file "1" is determined as the write destination journal file for the journal Aap₁ according to the write destination determination table 106 in Fig. 3, the write destination journal file is changed by the write destination determining part 102, to set "journal file: 2" as the write destination journal file for "processing definition ID: A".
At this time, in the write destination holding table 107, the write destination journal file for "processing definition ID: A" is "journal file: 1 ".
In step 410 for the journal A1p₁, the values on the write destination determination table 106 and the values on the write destination holding table 107 are different (YES in step 410). Thus, in step 450, "changed" is described in the write destination change notice area of the journal A2p₁.
At this time point, since "YES" decision in step 410 is made for the first time, the write destination holding table 107 is not changed. In step 500, the journal A1p₁ is written in the journal file "1".
In step 300 for the next journal A2p₁, the journal file "2" is determined as the write destination journal file of the journal A2p₁ according to the write destination determination table 106 of Fig. 3.
Note that the write destination journal file for "processing definition ID: A" is not changed.
At this time, in the write destination holding table 107, the write destination journal file for "processing definition ID: A" is "journal file: 1".
In step 410 for the journal file A2p₁, the values on the write destination determination table 106 and the values on the write destination holding table 107 are different (YES in step 410). Thus, in step 450, "changed" is described in the write destination change notice area of the journal A2p₁.
Since "YES" decision in step 410 is made for the second time, in the write destination holding table 107, the write destination journal file for "processing definition ID: A" is changed to "journal file: 2". In step 500, the journal A2p₁ is written in the journal file "2".

In this manner, when the write destination journal file is to be changed among journals having the same processing definition ID, a write destination change notice (a notice "changed") notifying a change of the write destination journal file is described in the last journal (journal A1p₁ mentioned above) before the change of the write destination journal file and the first journal (journal A2p₁ mentioned above) after the change of the write destination journal file.

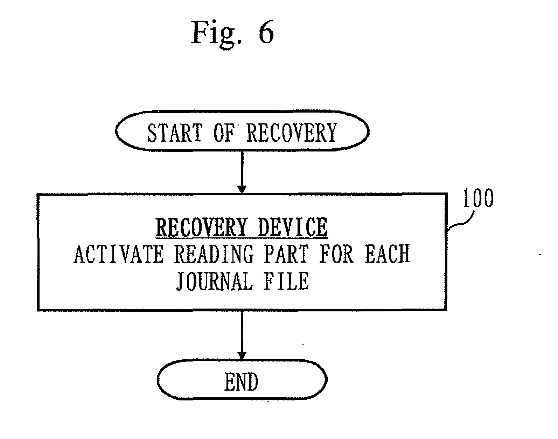

The recovery operation will be explained with reference to Figs. 6, 7, 8, 9, 10, and 11.

Fig. 6 shows the flow of the recovery device 200.

In step 100, the recovery device 200 reads all journal files existing in a directory specified in advance, and activates the reading part 201 for each journal file.
When activation of the reading part 201 is completed, the flow of Fig. 6 ends.

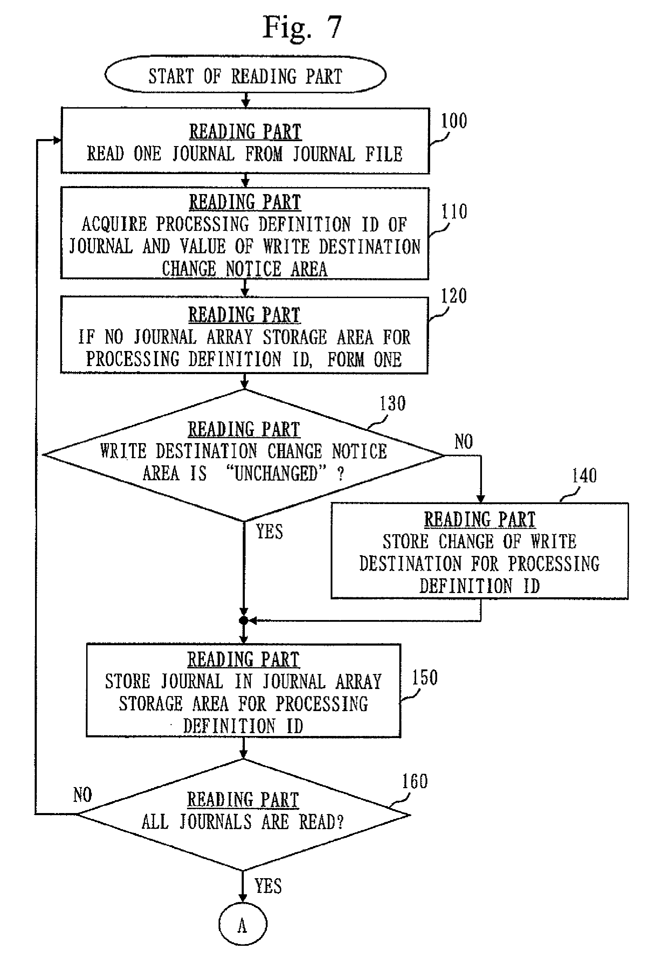

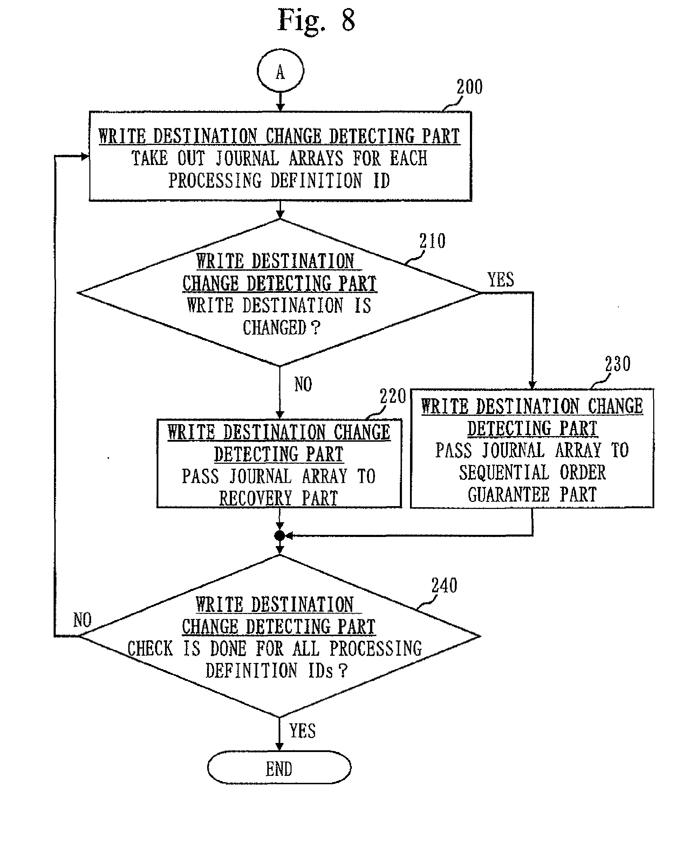

Figs. 7 and 8 show the flow of the reading part 201 and write destination change detecting part 202.

In step 100, the reading part 201 opens the journal file 400 (500) correlated to it, and takes out the journals 600 one by one. The flow proceeds to step 110.

In step 110, the reading part 201 acquires the processing definition ID and the values of the write destination change notice area from the journal header. The flow proceeds to step 120.

In step 120, the reading part 201 checks whether there is a journal array storage area (for example, an area in a work memory) for the processing definition ID acquired in step 110. If there is no journal array storage area, the reading part 201 forms a journal array storage area. The flow proceeds to step 130.

In step 130, the reading part 201 checks the values of the write destination change notice area acquired in step 110. If "changed", the flow proceeds to step 140. If "unchanged", the flow proceeds to step 150.

In step 140, the reading part 201 forms a new write destination change/non-change storage area (for example, an area in the work memory) for the processing definition ID, and stores the change of the write destination journal file for the processing definition ID, in the write destination change/non-change storage area. The flow proceeds to step 150.
As described above, the processing definition ID regarding which the change of the write destination journal file is stored in the write destination change/non-change storage area in step 140, that is, the processing definition ID described in the journal 600 for which "changed" is described in the write destination change notice area, is referred to as the write destination change incidence ID.

In step 150, the reading part 201 adds the journal 600 to the journal array storage area for the corresponding processing definition ID. The flow proceeds to step 160.

In step 160, if the reading part 201 has read all journals 600 of the journal file, the flow proceeds to step 200.
If the reading part 201 has not read all the journals 600 of the journal file, the flow proceeds to step 100. The reading part 201 continues reading the journals 600.

In step 200, the write destination change detecting part 202 takes out one or more journals (called a journal array) stored in the journal array storage area, for each processing definition ID. The flow proceeds to step 210.

In step 210, the write destination change detecting part 202 checks whether or not the write destination journal file is changed, by referring to the write destination change/non-change storage area of the corresponding processing definition ID. If the write destination journal file is not changed, the flow proceeds to step 220; if changed, to step 230.

In step 220, the write destination change detecting part 202 passes the journal array to the recovery part 203. The flow proceeds to step 240.
Namely, the write destination change detecting part 202 outputs a journal array generated for a processing definition ID other than the write destination change incidence ID, to the recovery part 203.

In step 230, the write destination change detecting part 202 passes the journal array to the sequential order guarantee part 204. The flow proceeds to step 240.
Namely, the write destination change detecting part 202 outputs a journal array generated for the write destination change incidence ID, to the sequential order guarantee part 204.

In step 240, if the journal arrays of every processing definition ID are processed, the write destination change detecting part 202 ends the operation.
If there is an unprocessed processing definition ID, the flow proceeds to step 200, and the write destination change detecting part 202 continues processing the journal array.

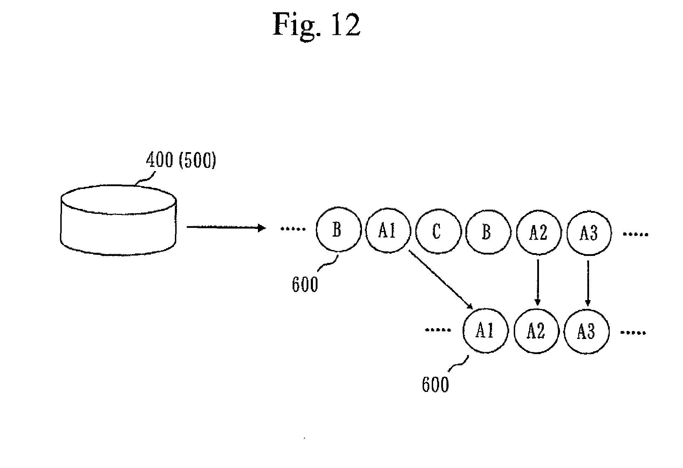

Fig. 12 shows the notion of journal array generation.
In order to simplify the explanation, the journals 600 of Fig. 12 show only "processing definition ID" and "processing ID".
The journal file 400 (500) includes the journals 600 of a plurality of processing definition IDs. The reading part 201 classifies the journals 600 according to the processing definition IDs, and gathers the journals 600 having the same processing definition ID, thus obtaining a journal array.
In the state shown in Fig. 12, only the journals 600 having the processing definition A are extracted from the journal file 400 (500) where the journals 600 of processing definitions A, B, and C coexist, to generate a journal array having the processing definition A.

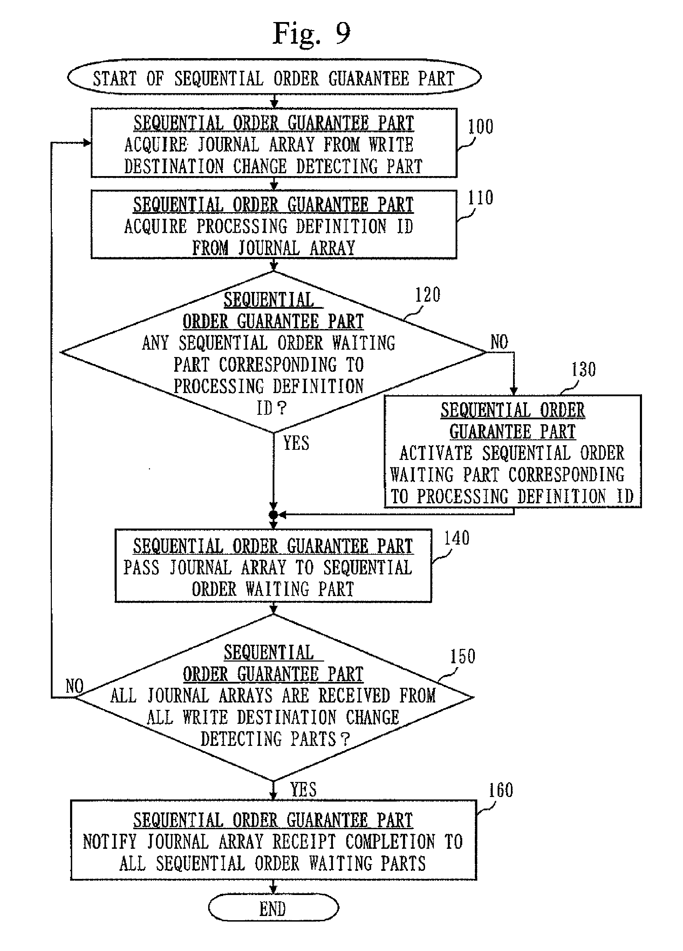

Fig. 9 shows the operation flow of the sequential order guarantee part 204.

In step 100, the sequential order guarantee part 204 takes out one journal array from a set of journal arrays passed from the write destination change detecting part 202. The flow proceeds to step 110.

In step 110, the sequential order guarantee part 204 acquires the processing definition ID from the journal array taken out in step 100. The flow proceeds to step 120.
In step 120, the sequential order guarantee part 204 checks whether the sequential order waiting part 205 corresponding to the processing definition ID is activated. If the sequential order waiting part 205 is activated, the flow proceeds to step 140; if not, to step 130.

In step 130, the sequential order guarantee part 204 activates the sequential order waiting part 205 corresponding to the processing definition ID. The flow proceeds to step 140.

In step 140, the sequential order guarantee part 204 passes the journal array to the sequential order waiting part 205 corresponding to the processing definition ID. The flow proceeds to step 150.

In step 150, the sequential order guarantee part 204 checks whether or not all the journal arrays passed from the write destination change detecting part 202 are processed. If all the journal arrays are processed, the flow proceeds to step 160.
If there is an unprocessed journal array, the flow proceeds to step 100, and the sequential order guarantee part 204 continues processing the journal array.

In step 160, the sequential order guarantee part 204 notifies journal array receipt completion to all the sequential order waiting parts 205, and ends the operation.

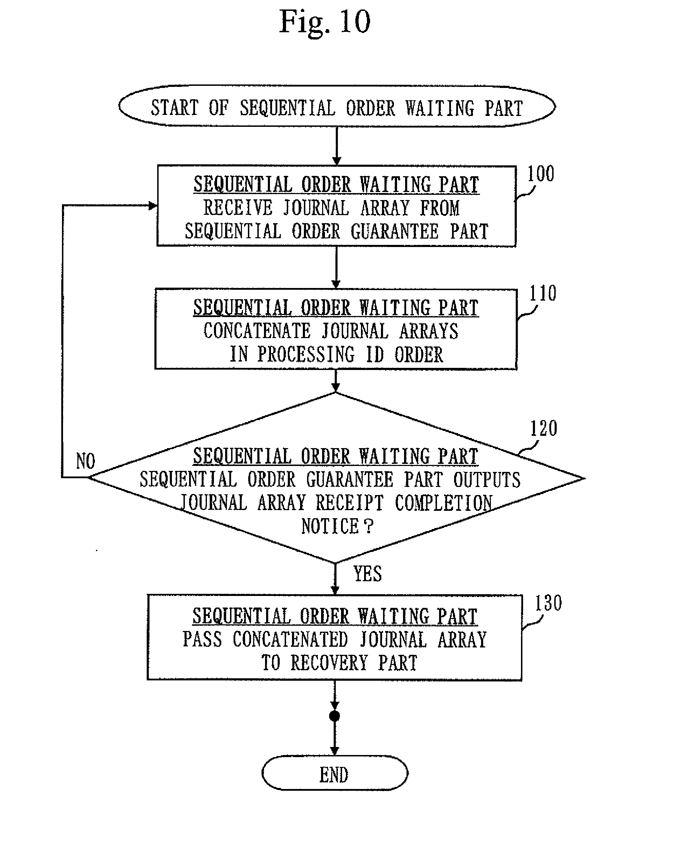

Fig. 10 is an operation flow of the sequential order waiting part 205.

In step 100, the sequential order waiting part 205 receives the journal array from the sequential order guarantee part 204. The flow proceeds to step 110.

In step 110, the sequential order waiting part 205 reconstitutes the received journal arrays into one journal array in the processing ID order. The flow proceeds to step 120.
Namely, the sequential order waiting part 205 concatenates two or more journal arrays generated for the common write destination change incidence ID.

In step 120, the sequential order waiting part 205 checks whether the sequential order guarantee part 204 outputs the journal array receipt completion notice. If the sequential order guarantee part 204 outputs the journal array receipt completion notice, the flow proceeds to step 130.
If the sequential order guarantee part 204 does not output the journal array receipt completion notice, the flow proceeds to step 100, and the sequential order waiting part 205 continues receiving the journal arrays.

In step 130, the sequential order waiting part 205 passes the concatenated journal array to the recovery part 203c.

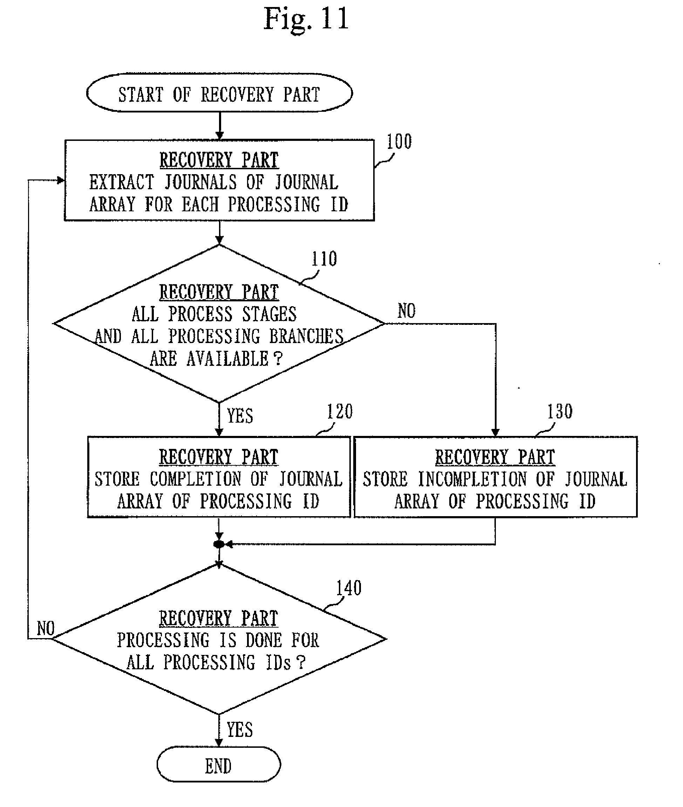

Fig. 11 shows the operation flow of the recovery part 203.

In step 100, the recovery part 203 takes out a plurality of journals having a certain processing ID from the journal array passed in an ascending order of the processing definition IDs. The flow proceeds to step 110.

In step 110, the recovery part 203 checks the taken-out journals, to see whether all processing stages and all processing branches are available for the processing ID of the taken-out journals.
If all processing stages and all processing branches are available, the recovery part 203 proceeds to step 120.
If all processing stages and all processing branches are not available, the recovery part 203 proceeds to step 130.

In step 120, the recovery part 203 stores completion of the journal array of this processing ID. The recovery part 203 proceeds to step 140.

In step 130, the recovery part 203 stores incompletion of the journal array of this processing ID. The recovery part 203 proceeds to step 140.

In step 140, the recovery part 203 checks whether the processing is done for all the processing IDs included in the journal array.
If the processing is done for all the processing IDs, the recovery part 203 ends the operation.
If the processing is not done for all the processing IDs, the recovery part 203 continues processing.

The recovery part 203 analyzes the journal array to decide which processing ID is complete and which processing ID is incomplete, of a certain definition ID.
The application 300 acquires the completion status of the internal processing. If there is an incomplete internal processing, the application 300 resumes processing. Thus, an internal processing suspended by an abnormal end can be resumed.

As described above, according to this embodiment, by the write destination change detecting part only the journal array (which requires sequential order guarantee) of a processing definition for which the write destination journal file is changed, becomes the objective of the sequence order guarantee. As a result, the delay due to the sequential order guarantee processing can be minimized, and the recovery processing of the whole application can be performed at high speed.

According to this embodiment, when the write destination journal file is changed, a write destination change notice is described in the journal. The processing procedure ID of the journal in which the write destination change notice is described is separated as the write destination change incidence ID from the other processing definition IDs. Two or more journal arrays generated for a common write destination change incidence ID are concatenated.
Therefore, the journal file need not be fixed but can be changed, leading to an improvement in journal write performance.
A journal for which the write destination journal file is changed can be detected based on a write destination change notice. Hence, journal files can be read in a parallel manner, thus shortening the read time.

### Embodiment 2.

According to Embodiment 1 described above, all the journal arrays each having a processing definition ID for which write destination change notice is set are passed to the sequential order guarantee part 204.
In contrast to this, according to Embodiment 2, when a journal array matches a certain pattern, even if a write destination change notice is set to it, it is not passed to the sequential order guarantee part 204. This minimizes the delay caused by the sequential order guarantee, and speeds up the recovery processing of the entire application.

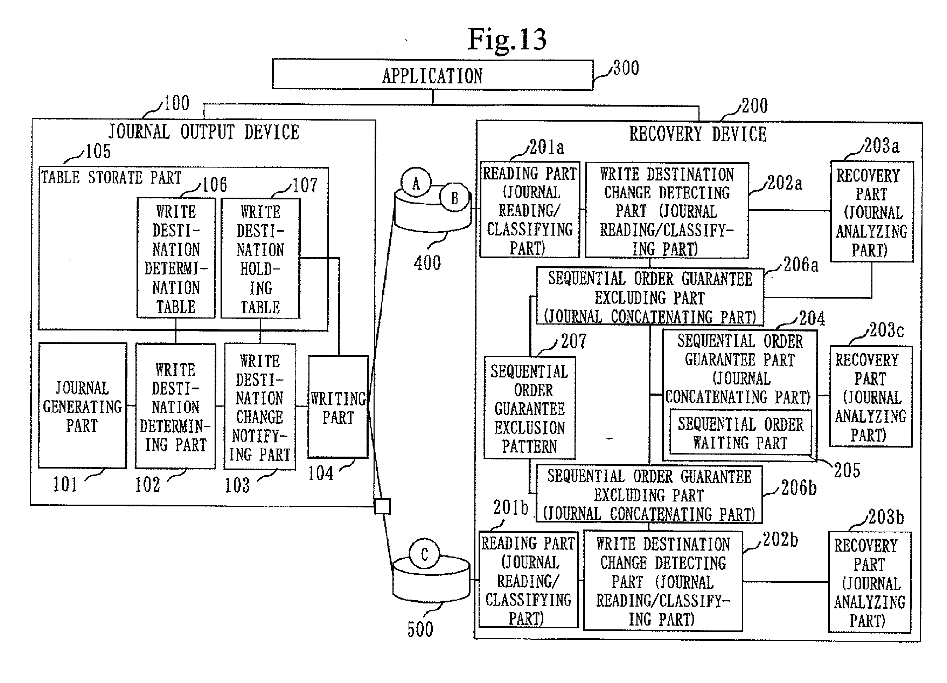

Fig. 13 shows a configuration example of a journal management system according to Embodiment 2.

According to Embodiment 2, the journal output device 100 is provided with a sequential order guarantee excluding part 206a, a sequential order guarantee excluding part 206b, and a sequential order guarantee exclusion pattern storage part 207, in addition to the configuration of Embodiment 1.
If the sequential order guarantee excluding part 206a and the sequential order guarantee excluding part 206b need not be distinguished from each other, a sequential order guarantee excluding part is expressed as a sequential order guarantee excluding part 206.
In Embodiment 2, the write destination change notice of the journal 600 includes a write destination change notice (OUT) and a write destination change notice (IN).

The write destination change notice (OUT) is information notifying that a journal having this notice is the last journal generated before change of the write destination journal file. This is an example of a last data-before change notice.
The write destination change notice (IN) is information notifying that a journal having this notice is the first journal generated after change of the write destination journal file. This is an example of a first data-after change notice.
Namely, according to this embodiment, when the write destination journal file is to be changed among journals having the same processing definition ID, the write destination change notifying part 103 describes a write destination change notice (OUT) in the write destination change notice area of the last journal generated before change of the write destination journal file.
Also, when the write destination journal file is changed among journals having the same processing definition ID, the write destination change notifying part 103 describes a write destination change notice (IN) in the write destination change notice area of the first journal generated after change of the write destination journal file.

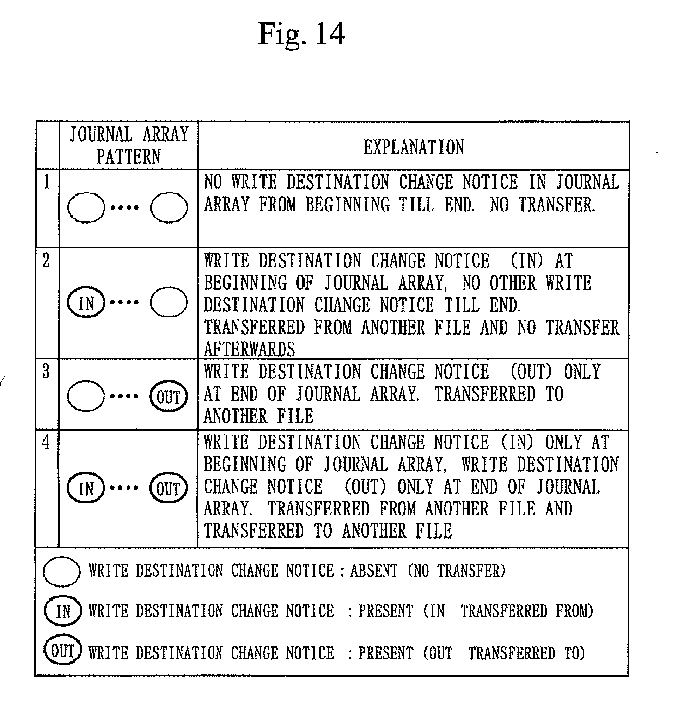

The sequential order guarantee exclusion pattern storage part 207 stores a sequential order guarantee exclusion pattern.
As will be described later, the sequential order guarantee exclusion pattern is the pattern of a journal array in which a write destination change notice (IN) is described in the first journal and a write destination change notice (OUT) is not described in the last journal.
The sequential order guarantee exclusion pattern is pattern 2 in Fig. 14 to be described later, and is an example of an atypical journal array pattern.
The sequential order guarantee exclusion pattern storage part 207 is an example of a storage part.

The sequential order guarantee excluding part 206 examines whether or not a journal array inputted from the write destination change detecting part 202 matches the sequential order guarantee exclusion pattern. If the inputted journal array matches the sequential order guarantee exclusion pattern, the sequential order guarantee excluding part 206 outputs part of the inputted journal array to the recovery part 203 without the part of the inputted journal array being the objective for concatenating with another journal array.
More specifically, if the inputted journal array matches the sequential order guarantee exclusion pattern, the sequential order guarantee excluding part 206 analyzes the inputted journal array and examines whether or not there is a processing instance whose processing procedure is completed.
If there is a processing instance whose processing procedure is completed, the sequential order guarantee excluding part 206 extracts one or more journals that describe a processing ID representing a place in an occurrence order subsequent to a processing instance whose processing procedure is completed, from the inputted journal array.
Furthermore, the sequential order guarantee excluding part 206 outputs the extracted journal to the recovery part 203 without the extracted journal being the objective for concatenating with another journal array.
The sequential order guarantee excluding part 206 and the sequential order guarantee part 204 are examples of the journal concatenating part.

In the configuration of Fig. 13, elements other than the write destination change notifying part 103, the sequential order guarantee excluding part 206, and the sequential order guarantee exclusion pattern storage part 207 are identical to those shown in Fig. 1, and their description will accordingly be omitted.

The sequential order guarantee exclusion pattern will be described with reference to Fig. 14.

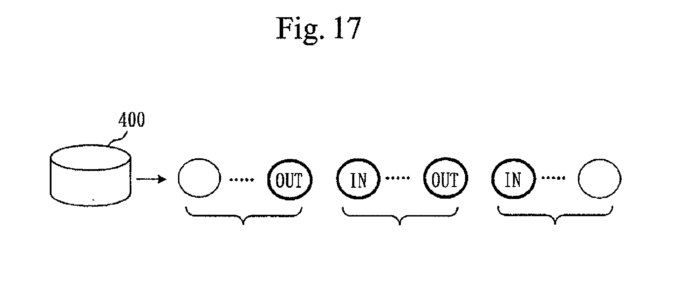

Fig. 14 shows journal array patterns.
Namely, Fig. 14 shows journal array patterns obtained by classifying journals included in one journal file according to processing definition IDs, and dividing the classified journals at write destination change notices, as shown in Fig. 17.
Fig. 17 shows a case where three journal arrays describing the same processing definition ID are generated from one journal file (the write destination journal file is changed twice).

As shown in Fig. 14, the journal array patterns include the following four patterns.
When patterns of (2) to (4) appear, two or more journal arrays are extracted for one processing definition ID, as shown in Fig. 17.
Regarding the pattern of (1), one journal array is always extracted for one processing definition ID.

(1) Pattern 1 is a journal array including no write destination change notice.
(2) Pattern 2 is a journal array in which a write destination change notice (IN) is described in the first journal and no write destination change notice is described after the first journal through the last journal.
(3) Pattern 3 is a journal array in which a write destination change notice (OUT) is described in only the last journal.
(4) Pattern 4 is a journal array in which a write destination change notice (IN) is described in the first journal and a write destination change notice (OUT) is described in the last journal.
Pattern 2 of (2) is the sequential order guarantee exclusion pattern.

The operation of a journal management system according to this embodiment will now be described.

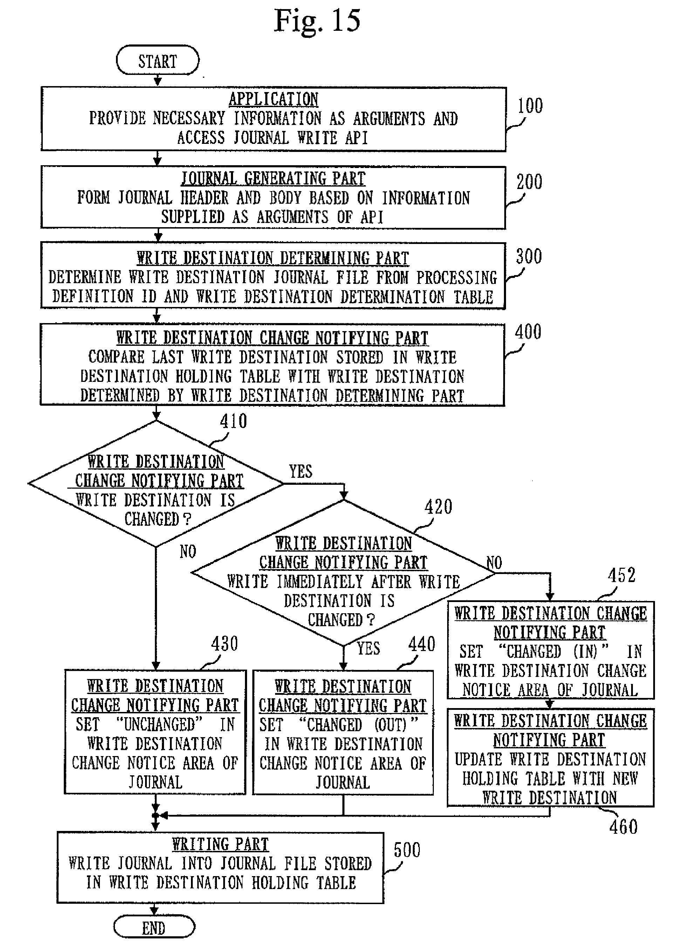

The operation in a normal state will be described with reference to the flow of Fig. 15.

Steps 100 to 400 are the same as those in Embodiment 1, and their description will accordingly be omitted.
In step 410, the write destination change notifying part 103 checks whether or not the write destination journal file is changed by the same checking procedure as in Embodiment 1. If the write destination journal file is changed, the flow proceeds to step 420; if unchanged, to step 430.

In step 430, the write destination change notifying part 103 sets "unchanged" in the write destination change notice area of the journal header. The flow proceeds to step 500.

In step 420, the write destination change notifying part 103 checks whether the current write is a write immediately after the write destination journal file is changed. If the current write is a write immediately after the write destination journal file is changed, the flow proceeds to step 440. If the current write is the second write, the flow proceeds to step 452.
Namely, the write destination change notifying part 103 checks whether the "YES" decision (decision that the write destination journal file is changed) in step 410 is made for the first time or the second time. If the "YES" decision is made for the first time, the flow proceeds to step 440; if the second time, to step 452.

In step 440, the write destination change notifying part 103 sets "changed (OUT)" in the write destination change notice area as the write destination change notice (OUT). The flow proceeds to step 500.

In step 452, the write destination change notifying part 103 sets "changed (IN)" in the write destination change notice area as the write destination change notice (IN). The flow proceeds to step 460.

In step 460, the write destination change notifying part 103 writes the value of the write destination journal file of the write destination determination table 106 into the write destination holding table 107, thus updating the write destination holding table 107. The flow proceeds to step 500.

In step 500, the writing part 104 writes the journal 600 into the write destination journal file stored in the write destination holding table 107.
When the write is completed, the writing part 104 returns the processing to the application.

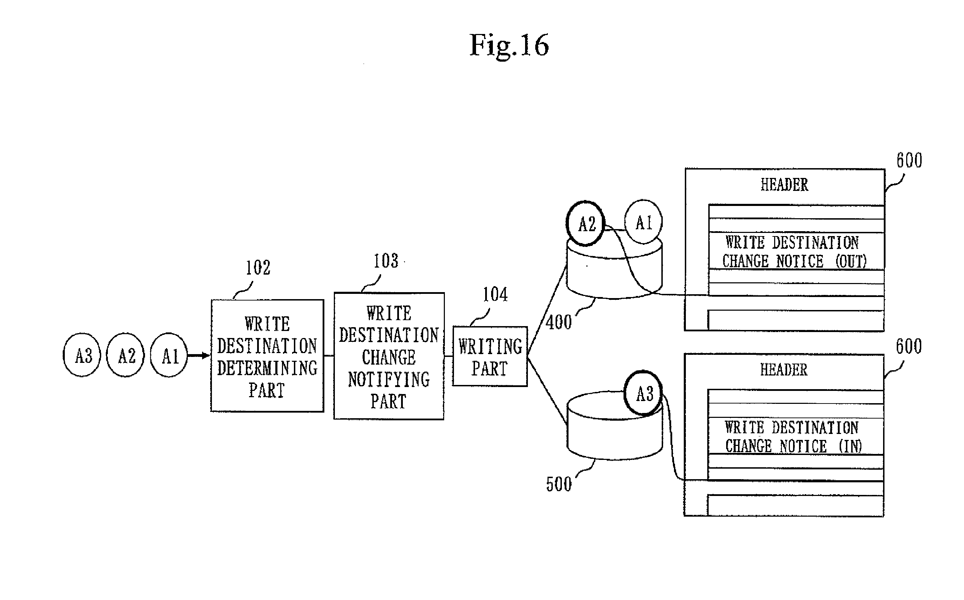

Fig. 16 explains the operation of the write destination change notifying part 103 to describe "write destination change notice (OUT)" and "write destination change notice (IN)" in the write destination change notice area of the journal 600.

When writing a journal 600 having "processing definition ID: A" and "processing ID: 2", if the write destination journal file is changed, the write destination change notifying part 103 stores "changed (OUT)" as "write destination change notice (OUT)" in the write destination change notice area of the journal having "processing definition ID: A" and "processing ID: 2". The writing part 104 writes this journal in the journal file 400 before the change.
Also, the write destination change notifying part 103 stores "changed (IN)" as "write destination change notice (IN)" in the write destination change notice area of the journal (second) having "processing definition ID: A" and "processing ID: 3". The writing part 104 writes this journal into the journal file 500 after the change.

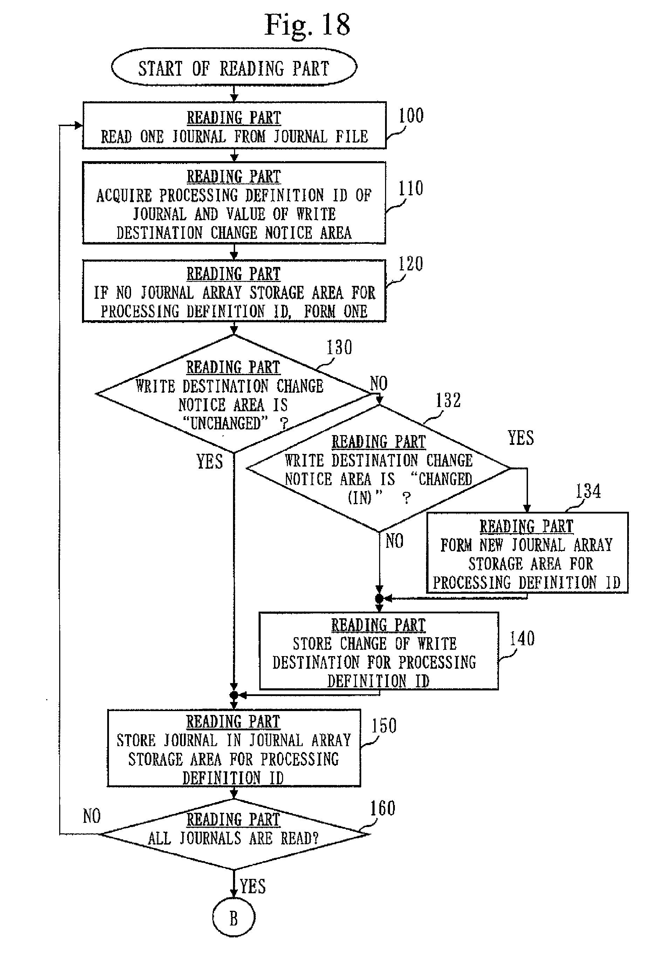

The recovery-state operation will be described with reference to Figs. 18, 19, and 20.
The flow for the recovery device 200 is identical to that of Embodiment 1, and its description will accordingly be omitted.

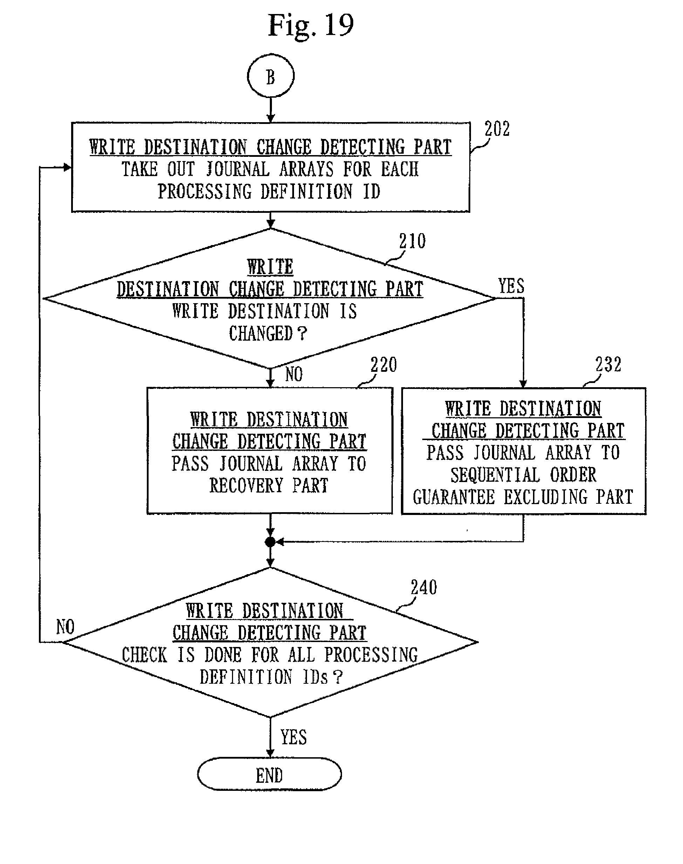

Figs. 18 and 19 show the flows of the reading part 201 and the write destination change detecting part 202.

In step 100, the reading part 201 opens a correlated journal file 400 (500), and takes out the journals one by one. The flow proceeds to step 110.

In step 110, the reading part 201 acquires the processing definition ID and the value of the write destination change notice area from the journal header. The flow proceeds to step 120.

In step 120, the reading part 201 checks whether there is a journal array storage area (for example, an area in the work memory) for the processing definition ID acquired in step 110. If there is no journal array storage area, one is formed. The flow proceeds to step 130.

In step 130, the reading part 201 checks the value of the write destination change notice area acquired in step 110. If the value is "changed", the flow proceeds to step 132; if "unchanged", to step 150.

In step 132, the reading part 201 checks the value of the write destination change notice area. If the value is "changed (IN)", the flow proceeds to step 134; if "changed (OUT)", to step 140.

In step 134, the reading part 201 forms a new journal array storage area for this processing definition ID. The flow proceeds to step 140.

In step 140, the reading part 201 stores in the write destination change/non-change storage area the change of the write destination journal file for this processing definition ID. The flow proceeds to step 150.

In step 150, the reading part 201 adds the journal 600 to the journal array storage area for this processing definition ID. The flow proceeds to step 160.

In step 160, if the reading part 201 has read all the journals 600 of the journal file, the flow proceeds to step 202.
If the reading part 201 has not read all the journals 600 of the journal file, the flow proceeds to step 100. The reading part 201 continues reading the journals 600.

In step 202, the write destination change detecting part 202 takes out one or more journals (called a journal array) stored in the journal array storage area, for each processing definition ID. The flow proceeds to step 210.

In step 210, the write destination change detecting part 202 checks whether or not the write destination journal file is changed, by referring to the write destination change/non-change storage area for the corresponding processing definition ID. If the write destination journal file is not changed, the flow proceeds to step 220; if changed, the flow proceeds to step 232.

In step 220, the write destination change detecting part 202 passes the journal array to the recovery part 203. The flow proceeds to step 240.
The journal array outputted from the write destination change detecting part 202 to the recovery part 203 in step 220 is a journal array that matches pattern 1 of Fig. 14.

In step 232, the write destination change detecting part 202 passes the journal array to the sequential order guarantee excluding part 206. The flow proceeds to step 240.
The journal array outputted from the write destination change detecting part 202 to the sequential order guarantee excluding part 206 in step 232 is a journal array that matches any one of patterns 2 to 4 of Fig. 14.

In step 240, if the journal arrays of all the processing definition IDs are processed, the write destination change detecting part 202 ends the operation.
If there is an unprocessed processing definition ID, the flow proceeds to step 202. The write destination change detecting part 202 continues processing the journal array.

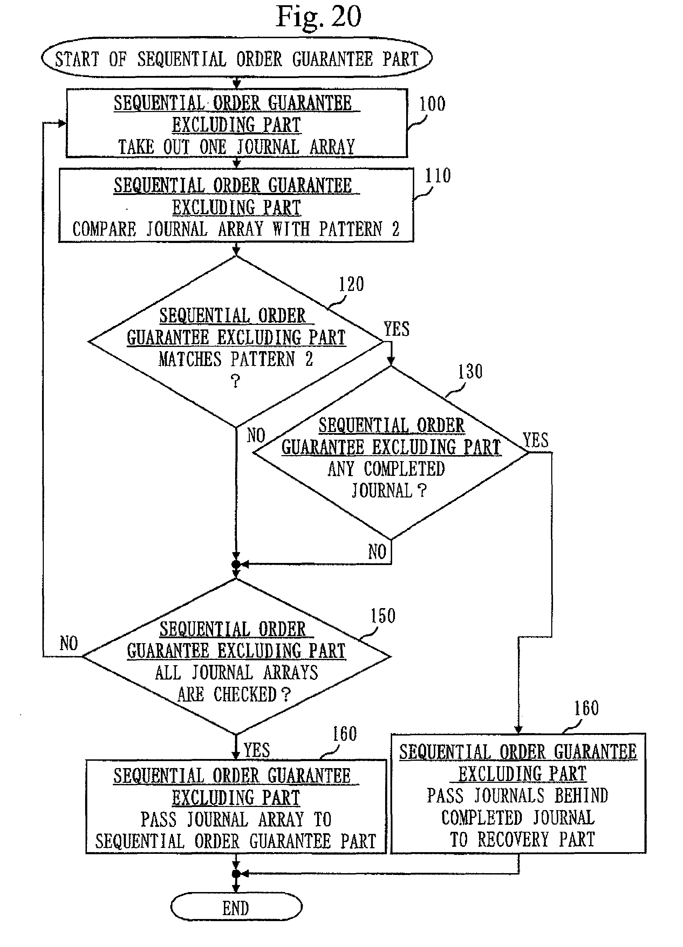

Fig. 20 shows the operation flow of the sequential order guarantee excluding part 206.

In step 100, the sequential order guarantee excluding part 206 takes out one journal array from the journal arrays passed by the write destination change detecting part 202. The flow proceeds to step 110.

In step 110, the sequential order guarantee excluding part 206 compares the taken-out journal array with pattern 2 of Fig. 14. The flow proceeds to step 120.

In step 120, if the journal array matches pattern 2, the sequential order guarantee excluding part 206 proceeds to step 130.
If the journal array matches a pattern other than pattern 2, the sequential order guarantee excluding part 206 proceeds to step 140.

In step 130, the sequential order guarantee excluding part 206 checks the journals in the journal array in the ascending order for each processing ID, to see if there is a completed processing ID. If there is a processing ID completed, the sequential order guarantee excluding part 206 proceeds to step 160. If there is no processing ID completed, the sequential order guarantee excluding part 206 proceeds to step 140.

In step 160, the sequential order guarantee excluding part 206 reconstitutes the journals of processing IDs behind the processing ID completed, as a journal array, and passes the reconstituted journal array to the recovery part 203. The sequential order guarantee excluding part 206 ends the operation.
In this case, the journal array formed of the journals of the processing IDs behind the processing ID completed is not to be concatenated with another journal array, but is passed to the recovery part 203.

In step 140, the sequential order guarantee excluding part 206 checks whether all the journal arrays passed are processed. If all the journal arrays passed are not processed, the flow proceeds to step 100, and the sequential order guarantee excluding part 206 continues processing.
If all the journal arrays passed are processed, the flow proceeds to step 150.

In step 150, the sequential order guarantee excluding part 206 passes the journal array to the sequential order guarantee part 204.

For example, assume that a journal array (A1p₁, A2p₁, A1p_{n_1}, Alp_{n_2}) having "processing ID: A" is generated out from the group of journals 600 shown in Fig. 37, and that this journal array (A1p₁, A2p₁, A1p_{n_1}, A1p_{n_2}) matches pattern 2 of Fig. 14.
Note that "processing ID: 1" is completed because both A1p_{n_1} and A1p_{n_2} are available. In step 160, the sequential order guarantee excluding part 206 outputs the journal A2p₁ that describes "processing ID: 2" which is a processing ID behind "processing ID: 1", to the recovery part 203.

The operations of the sequential order guarantee part 204, the sequential order waiting part 205, and the recovery part 203 are the same as those in Embodiment 1, and their description will accordingly be omitted.

As described above, according to Embodiment 2, when a journal array matches pattern 2 and includes a completed journal, even if it has a write destination change notice, the sequential order guarantee excluding part does not pass it to the sequential order guarantee part, but passes it to the recovery part.
Because of the change of the write destination journal file, journals describing a common processing definition ID are dispersed in a plurality of journal files. Such journals are supposed to be concatenated by the sequential order guarantee part to obtain a complete state. Then, the concatenated journal array is supposed to be analyzed and passed to the recovery part.
However, as in pattern 2, if the journal array does not include a change of the write destination journal file until the end but includes a processing ID completed before the end, this indicates that the processing until this processing ID is completed. Therefore, the recovery processing does not require any journal before the completed processing ID.
This journal need not be passed to the sequential order guarantee part. By passing this journal to the recovery part directly, unnecessary sequential order guarantee can be eliminated, and it is possible to speed up the recovery processing of the whole application.

### Embodiment 3.

In Embodiment 2 described above, when a journal array matches the sequential order guarantee exclusion pattern, even if a write destination change notice is set to it, it is not passed to the sequential order guarantee part.
According to Embodiment 3, the journal array passed to the sequential order guarantee part is further analyzed, and is excluded from sequential order wait.

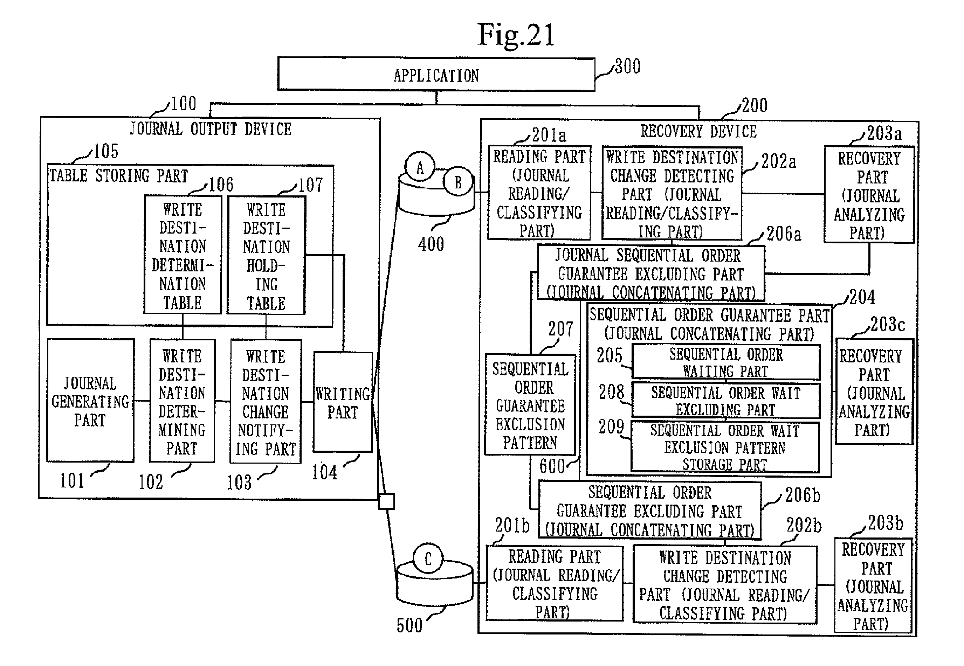

Fig. 21 shows a configuration example of a journal management system according to Embodiment 3.

According to this embodiment, the journal output device 100 is provided with a sequential order wait excluding part 208 and a sequential order wait exclusion pattern storage part 209, in addition to the configuration of Embodiment 2.
Elements other than the sequential order wait excluding part 208 and the sequential order wait exclusion pattern storage part 209 are identical to those of Embodiment 2, and their detailed description will accordingly be omitted.

The sequential order wait exclusion pattern storage part 209 stores a sequential order wait exclusion pattern.
The sequential order wait exclusion pattern will be described later in detail.
The sequential order wait exclusion pattern is an example of a restricted journal array pattern.
The sequential order wait exclusion pattern storage part 209 is an example of a storage part.

The sequential order wait excluding part 208 checks whether or not a journal array decided by the sequential order guarantee excluding part 206 as not matching the sequential order guarantee exclusion pattern (pattern 2 of Fig. 14), and furthermore a journal array decided in step 130 of Fig. 20 as "not having a completed journal" match the sequential order wait exclusion pattern.
If the journal array matches the sequential order wait exclusion pattern, the journal array describing a predetermined processing ID is excluded from concatenation with another journal array.
The sequential order wait excluding part 208, as well as the sequential order guarantee part 204 and the sequential order guarantee excluding part 206, is an example of a journal concatenating part.

The sequential order wait exclusion pattern stored in the sequential order wait exclusion pattern storage part 209 will be described.

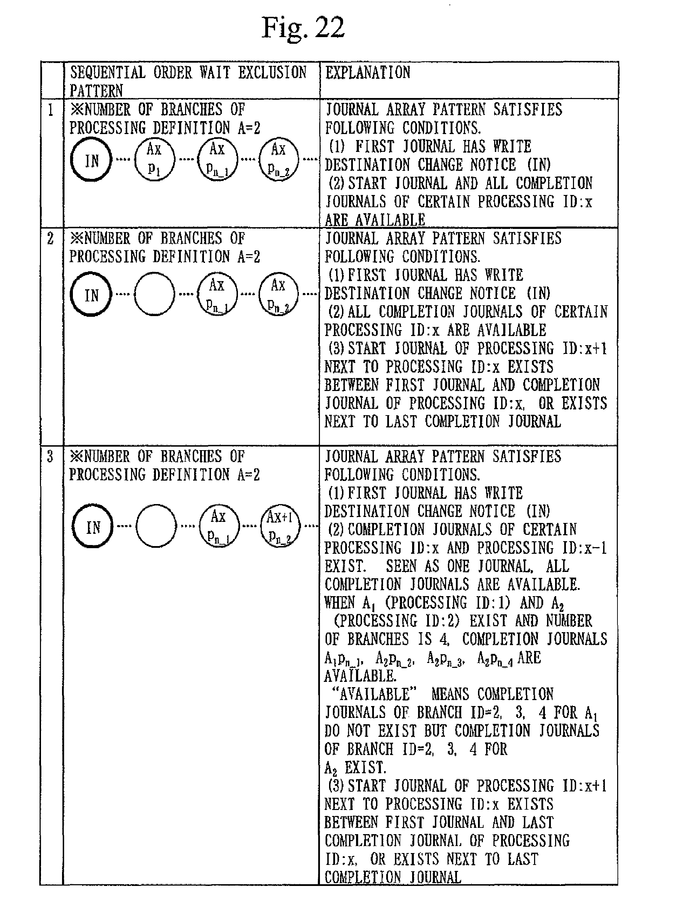

When a certain journal array has a write destination change notice (IN), the start journal (a journal indicating that the initial processing stage of a certain processing ID of a certain processing definition is completed) of journals included in this journal array, or journals subsequent to the start journal, may possibly be included in a previous journal array (a journal array generated from journals written into another journal file). Hence, it is necessary to wait for acquisition of the previous journal array. The recovery processing need be conducted after journal arrays describing the common processing ID are concatenated.
Even when a certain array has a write destination change notice (IN), if it is known that a processing instance of a certain processing ID in this journal array is completed, it is sufficient to resume the processing instance subsequent to this processing ID. Hence, a journal describing this processing ID and a journal describing a processing ID preceding this processing ID will not be used for the recovery processing.
Therefore, journal array wait need not be performed.
The sequential order wait exclusion pattern stored in the sequential order wait exclusion pattern storage part 209 is a pattern serving to identify such a journal array.
More specifically, the sequential order wait exclusion pattern includes patterns 1 to 3 shown in Fig. 22.

Pattern 1 is a journal array pattern that satisfies the following conditions.
(1) The first journal has a write destination change notice (IN).
(2) The start journal and all the completion journals of a certain processing ID: x are available.
Note that "all the completion journal are available" means that there are completion journals for the number of processing branches, namely, for the number of branches in the processing procedure.
As described above, a start journal is a journal indicating completion of the initial step (processing stage) in the processing procedure. A completion journal is a journal indicating completion of the final step (processing stage) in the processing procedure.
If the journal array pattern matches pattern 1, the processing instance of processing ID: x and processing instances preceding the processing instance of processing ID: x are completed.
If the processing instance of processing ID: x is the final processing instance completed, then the journals can be analyzed from the start journal until the last journal (completion journal) of processing ID: x, and the recovery processing can be started.

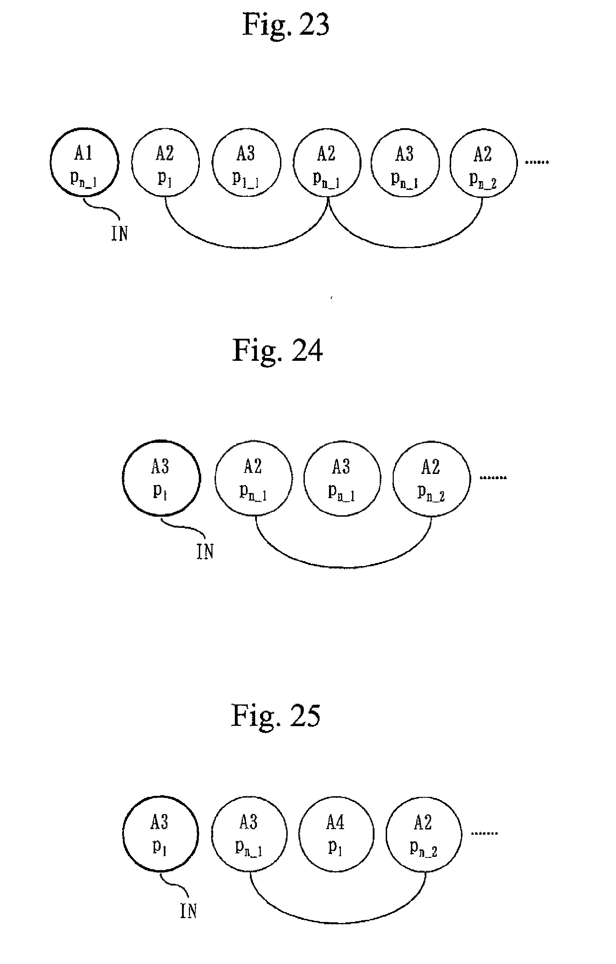

Fig. 23 shows an example of pattern 1 (the number of processing branches is 2).
In Fig. 23, the first journal A1p_{n_1} has a write destination change notice (IN), and completion journals A2p_{n_1} and A2p_{n_2} exist as opposed to a start journal A2p1, so that all the completion journals are available.

Pattern 2 is a journal array pattern that satisfies the following conditions.
(1) The first journals indicates that the write destination is changed (IN).
(2) All the completion journals of a certain processing ID: x are available (there is no start journal of processing ID: x).
(3) The start journal of processing ID: x+1 subsequent to processing ID:X exists between the first journal and the last completion journal of processing ID: x, or exists next to the last completion journal.
If a journal array matches pattern 2, even when the start journal of processing ID: x does not exist, all the completion journals are available, and the processing instances of processing ID: x are completed.
If the start journal of processing ID: x+1 next to processing ID: x exists in this journal array, the processing instance of processing ID: x and the processing instances before processing ID: x are not necessary for the recovery.

Fig. 24 shows an example of pattern 2 (the number of processing branches is 2).
In Fig. 24, the first journal A3p₁ has a write destination change notice (IN), and completion journals A2p_{n_1} and A2p_{n_2} of A2 are available.
Although there is no start journal of A2, since there is the start journal A3p₁ of A3, all the journals of the processing instances subsequent to A2 exist in this journal array.
Hence, the journal array before A2 is not necessary for recovery.

Pattern 3 is journal array pattern that satisfies the following conditions.
(1) The first journal indicates that write destination is changed (IN).
(2) The completion journals of certain processing ID: x and processing ID: x-1 exist. When seen as one journal, all the completion journals are available.
   One example is that A1 (processing ID: 1) and A2 (processing ID: 2) exist, the number of branches is 4, and completion journals A1p_{n_1}, A2p_{n_2}, A2p_{n_3}, and A2p_{n_4} are available.
   "Available" in here means that the completion journals of branch ID = 2, 3, 4 of A1 do not exist but the completion journals of branch ID = 2, 3, 4 of A2 exist.
(3) The start journal of processing ID: x+1 next to processing ID:x exists between the first journal and the last completion journal of processing ID: x, or exists next to the last completion journal.

Fig. 25 shows an example of pattern 3 (the number of processing branches is 2).
In Fig. 25, the first journal A3p₁ has a write destination change notice (IN), and there are completion journal A2pₙ_₂ of A2 and a completion journal A3p_{n_1} of A3.
Also, there is a start journal A3p₁ of A4.
Although completion journals are insufficient for both journals of A2 and A3 to be completed, the completion journals of A2 and A3 complement each other.
Overtaking does not take place in the same processing stage. Although not appearing in this journal array, the existence of A2p_{n_2} in a journal array (journals formed of journals written into another journal file) preceding this journal array is guaranteed by the existence of A3p_{n_2}. Therefore, it can be determined that the completion journals of A2 are available.

The operation of a journal management system according to this embodiment will be described.

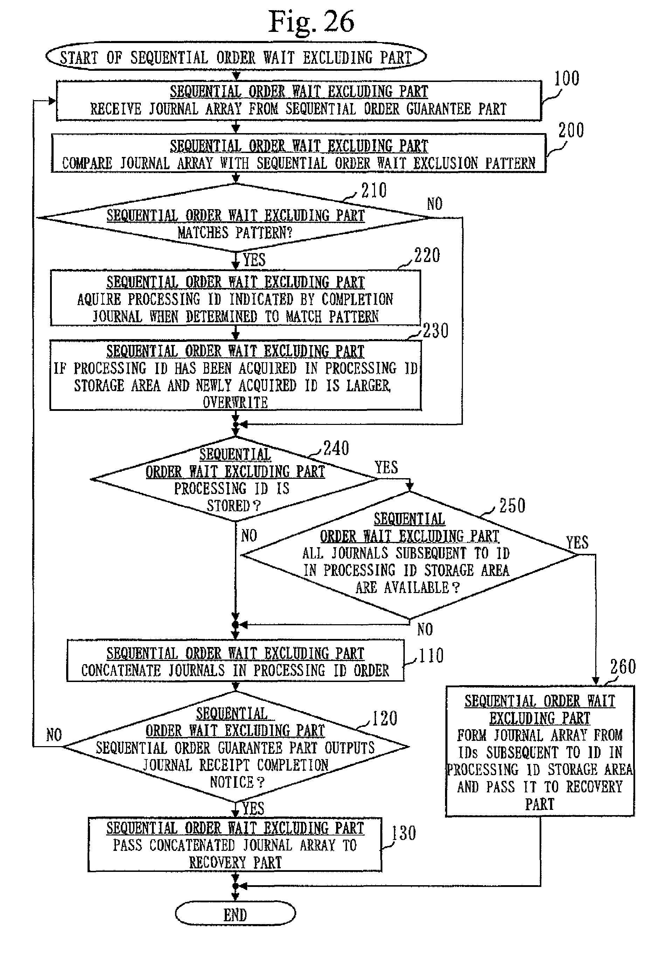

A flow in a normal state is identical to that of Embodiment 2, and its description will accordingly be omitted.
A flow in a recovery state is identical to that of Embodiment 2 except for the flow of the sequential order wait excluding part 208 of Fig. 26, and will accordingly be omitted.
Fig. 26 shows the operation flow of the sequential order wait excluding part 208.

The sequential order wait excluding part 208 receives the journal array from the sequential order guarantee part 204 in step 100, and proceeds to step 200.
The journal array to be inputted to the sequential order wait excluding part 208 is a journal array determined in step 120 of Fig. 20 as matching pattern 3 or 4, or a journal array of pattern 2 determined in step 130 of Fig. 20 as "not having a completed journal".

In step 200, the sequential order wait excluding part 208 compares the acquired journal array with the sequential order guarantee exclusion pattern. Then, the sequential order wait excluding part 208 proceeds to step 210.

If the acquired journal array matches any sequential order guarantee exclusion pattern in step 210, the sequential order wait excluding part 208 proceeds to step 220; if it does not match any sequential order guarantee exclusion pattern, to step 240.

In step 220, the sequential order wait excluding part 208 acquires the processing ID of the journal array that matches the sequential order guarantee exclusion pattern. Then, the sequential order wait excluding part 208 proceeds to step 230.
More specifically, the sequential order wait excluding part 208 extracts processing ID corresponding to processing ID: x indicated by the explanation of the patterns of Fig. 22, from the journal array.

In step 230, the sequential order wait excluding part 208 checks the processing ID storage area (for example, the area in the work memory). If the processing ID acquired in step 220 is not registered in the processing ID storage area, the sequential order wait excluding part 208 registers the acquired processing ID in the processing ID storage area.
In a case where the processing ID acquired in step 220 is already registered in the processing ID storage area, if the acquired processing ID is larger than the registered processing ID, the sequential order wait excluding part 208 registers the acquired processing ID by overwrite. Then, the sequential order wait excluding part 208 proceeds to step 240.

In step 240, the sequential order wait excluding part 208 checks the processing ID storage area. If the processing ID of the journal array received in step 100 is registered in the processing ID storage area, the sequential order wait excluding part 208 proceeds to step 250; if not registered, to step 110.

In step 250, the sequential order wait excluding part 208 checks the journal array received in step 100, and the journal array formed by concatenating the journal arrays received by then, to see if all the journals subsequent to the processing ID located in the processing ID storage area are available.
If such journals are available, the sequential order wait excluding part 208 proceeds to step 260; if not available, to step 110.

In step 260, the sequential order wait excluding part 208 concatenates the journal array received in step 100, with the journal array formed by concatenating the journal arrays received by then. The sequential order wait excluding part 208 then forms a journal array by extracting journals subsequent to the processing ID located in the processing ID storage area. The sequential order wait excluding part 208 passes the formed journal array to the recovery part 203, and ends the operation.

In step 110, the sequential order wait excluding part 208 concatenates the journal array received in step 100, with the journal array formed by concatenating the journal arrays received by then. Then, the sequential order wait excluding part 208 proceeds to step 120.

In step 120, the sequential order wait excluding part 208 checks whether or not a journal receipt completion notice is received from the sequential order guarantee part 204. If a journal receipt completion notice is received, the sequential order wait excluding part 208 proceeds to step 130.
If a journal receipt completion notice is not received, the sequential order wait excluding part 208 proceeds to step 100, and continues the sequential order wait processing.
In step 130, the sequential order wait excluding part 208 passes the journal array formed by concatenation to the recovery part 203, and ends the operation.

As described above, according to Embodiment 3, when a journal array matches a sequential order wait exclusion pattern, even if it is a journal array passed to the sequential order guarantee part, it will not wait for a preceding journal array.
More specifically, the sequential order wait excluding part 208 according to Embodiment 3 excludes a journal array describing a processing ID representing a place in the occurrence order preceding a processing ID corresponding to processing ID: x, from concatenation.
As a result, a processing delay caused by wait can be eliminated, and it is possible to speed up the recovery processing of the whole application.

Finally, a hardware configuration example of the journal output device 100 and recovery device 200 shown in Embodiments 1 to 3 will be described.

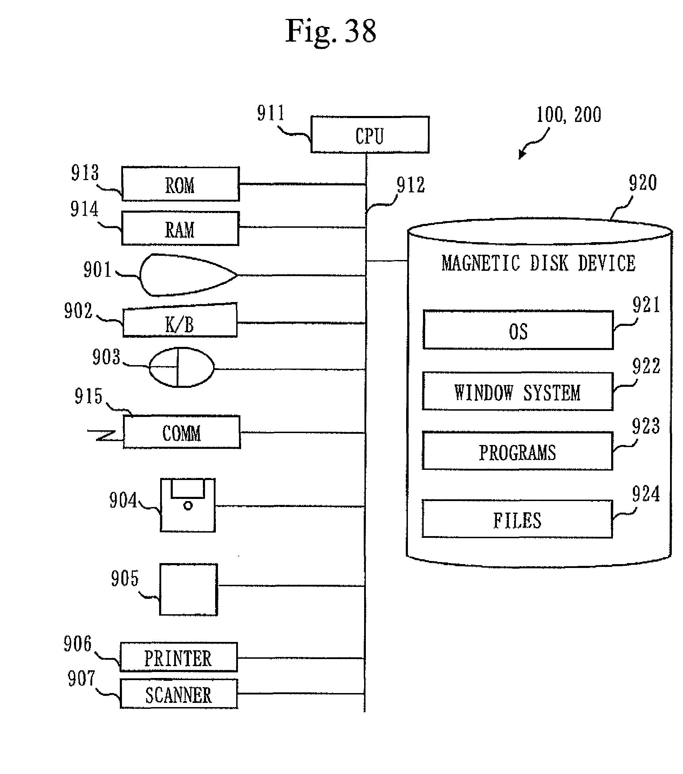

Fig. 38 is a diagram showing an example of the hardware resource of the journal output device 100 and recovery device 200 shown in Embodiments 1 to 3.
Note that the configuration of Fig. 38 is merely an example of the hardware configuration of the journal output device 100 and recovery device 200. The hardware configuration of the journal output device 100 and recovery device 200 is not limited to that shown in Fig. 38, but another configuration may also be possible.

Referring to Fig. 38, each of the journal output device 100 and the recovery device 200 includes a CPU 911 (also referred to as a Central Processing Unit, central processing device, processing device, computation device, microprocessor, microcomputer, or processor) that executes programs.
The CPU 911 is connected to, for example, a ROM (Read Only Memory) 913, a RAM (Random Access Memory) 914, a communication board 915, a display device 901, a keyboard 902, a mouse 903, and a magnetic disk device 920 via a bus 912, and controls these hardware devices.
Furthermore, the CPU 911 may be connected to an FDD 904 (Flexible Disk Drive), a compact disk device 905 (CDD), a printer device 906, or a scanner device 907. In place of the magnetic disk device 920, a storage device such as an SSD (Solid State Drive), an optical disk device, or a memory card (registered trademark) read/write device may be employed.
The RAM 914 is an example of a volatile memory. The ROM 913, and the storage media of the FDD 904, CDD 905, and magnetic disk device 920, are examples of a nonvolatile memory. These memories are examples of the storage device.
The "storage part" described in Embodiments 1 to 3 is realized by the RAM 914, the magnetic disk device 920, or the like.
The communication board 915, keyboard 902, mouse 903, scanner device 907, and the like are examples of an input device.
The communication board 915, display device 901, printer device 906, and the like are examples of an output device.

The communication board 915 is connected to a network.
For example, the communication board 915 is connected to a LAN (Local Area Network), the Internet, a WAN (Wide Area Network), or a SAN (Storage Area Network).

The magnetic disk device 920 stores an operating system 921 (OS), a window system 922, programs 923, and files 924.
The CPU 911 executes each program of the programs 923 utilizing the operating system 921 and the window system 922.

The RAM 914 temporarily stores at least some programs of the operating system 921 and application programs which are executed by the CPU 911.
The RAM 914 also stores various types of data necessary for the processing performed by the CPU 911.

The ROM 913 stores the BIOS (Basic Input Output System) program. The magnetic disk device 920 stores the boot program.
When booting the journal output device 100 or the recovery device 200, the BIOS program in the ROM 913 and the boot program in the magnetic disk device 920 are executed. The BIOS program and boot program boot the operating system 921.

The programs 923 include a program that executes the function described as a "part" (other than a "storage part"; this applies to the following description) in Embodiments 1 to 3.
The program is read and executed by the CPU 911.

The files 924 store information, data, signal values, variable values, and parameters indicating the results of the processings described as "determining", "deciding", "generating", "forming", "computing", "calculating", "comparing", "checking", "cross-checking", "updating", "setting", "registering", "selecting", "inputting", "outputting", "acquiring", and the like in Embodiments 1 to 3, as the entries of "files" and "databases".
The "files" and "databases" are stored in a recording medium such as a disk or memory.
The information, data, signal values, variable values, and parameters stored in the storage medium such as the disk or memory are read out to the main memory or cache memory by the CPU 911 through a read/write circuit.
The readout information, data, signal values, variable values, and parameters are used for the operation of the CPU such as extraction, search, look-up, comparison, arithmetic operation, computation, processing, edit, output, print, and display.
During the operation of the CPU including extraction, search, look-up, comparison, arithmetic operation, computation, processing, edit, output, print, and display, the information, data, signal values, variable values, and parameters are temporarily stored in the main memory, register, cache memory, buffer memory, or the like.
The arrows in the flowcharts described in Embodiments 1 to 3 mainly indicate input/output of data and signals.
The data and signal values are stored in a recording medium such as: the memory of the RAM 914, the flexible disk of the FDD 904, the compact disk of the CDD 905, or the magnetic disk of the magnetic disk device 920; or an optical disk, mini disk, or DVD.
The data and signals are transmitted online via the bus 912, a signal line, a cable, or other transmission media.

The "part" described in Embodiments 1 to 3 may be a "circuit", "device", or "equipment"; or a "step", "procedure", or "processing".
Namely, with the steps, procedures, and processings shown in the flowcharts described in Embodiments 1 to 3, the processings of the journal output device 100 and recovery device 200 can be regarded as a journal management method.
The "part" may be implemented as firmware stored in the ROM 913.
Alternatively, the "part" may be practiced by only software; by only hardware such as an element, a device, a substrate, or a wiring line; by a combination of software and hardware; or furthermore by a combination of software, hardware, and firmware.
The firmware and software are stored, as programs, in a recording medium such as a magnetic disk, flexible disk, optical disk, compact disk, mini disk, or DVD.
The program is read by the CPU 911 and executed by the CPU 911.
That is, the program causes the computer to function as the "part" of Embodiments 1 to 3. Alternatively, the program causes the computer to execute the procedure and method of the "part" of Embodiments 1 to 3.

In this manner, the journal output device 100 and recovery device 200 shown in Embodiments 1 to 3 are computers each comprising a CPU being a processing device; a memory, magnetic disk, or the like being a storage device; a keyboard, mouse, communication board, or the like being an input device; and a display device, communication board, or the like being an output device.
As described above, the functions expressed as the "parts" are implemented using these processing device, storage device, input device, and output device.

### Reference Signs List

100: journal output device; 101: journal generating part; 102: write destination determining part; 103: write destination change notifying part; 104: writing part; 105: table storage part; 106: write destination determination table; 107: write destination holding table; 200: recovery device; 201: reading part; 202: write destination change detecting part; 203: recovery part; 204: sequential order guarantee part; 205: sequential order waiting part; 206: sequential order guarantee excluding part; 207: sequential order guarantee exclusion pattern storage part; 208: sequential order wait excluding part; 209: sequential order wait exclusion pattern storage part; 300: application; 400: journal file; 500: journal file; 600: journal

## Claims

1. A journal management system comprising:
a journal generating part which generates data indicating a progress status of a processing in an application program and describing a processing procedure ID (Identifier) of a processing procedure of a processing in progress, as a journal, the application program including a plurality of types of processing procedures;
a write destination determining part which determines, for each journal generated, a write destination journal file to serve as a write destination of a journal from among a plurality of journal files;
a write destination change notifying part which, when a write destination journal file is to be changed among journals having a common processing procedure ID, describes a write destination change notice notifying change of the write destination journal file, in a journal generated before change of the write destination journal file and a journal generated after change of the write destination journal file;
a writing part which writes the journal into the write destination journal file determined by the write destination determining part;
a plurality of journal reading/classifying parts each of which is correlated to a journal file, reads the journal from the journal file correlated, classifies the journal that is read, according to the processing procedure ID, generates a journal array using not less than one journal classified, for each processing procedure ID, and when the journal that is read includes a journal describing the write destination change notice, separates a processing procedure ID described in the journal describing the write destination change notice, from other processing procedures ID as a write destination change incidence ID; and
a journal concatenating part which inputs a journal array generated for the write destination change incidence ID from at least one of the journal reading/classifying parts, and concatenates not less than two journal arrays generated for a common write destination change incidence ID.

2. The journal management system according to claim 1, further comprising a journal analyzing part
which inputs a journal array generated for a processing procedure ID other than the write destination change incidence ID from one of the journal reading/classifying parts, and analyzes the journal array inputted, and
which inputs a journal array after concatenation generated for the write destination change incidence ID from the journal concatenating part, and analyzes the journal array after concatenation inputted.

3. The journal management system according to claim 2,
wherein the write destination change notifying part, when the write destination journal file is to be changed among the journals having the common processing procedure ID,
describes, in the last journal before change of the write destination journal file, a last data-before change notice notifying that the journal is the last journal before change of the write destination journal file, as the write destination change notice, and
describes, in the first journal after change of the write destination journal file, a first data-after change notice notifying that the journal is the first journal after change of the write destination journal file, as the write destination change notice,
the journal management system further comprising:
a storage part which stores a pattern of a journal array having a first journal describing the first data-after change notice and a last journal not describing the last data-before change notice, as an atypical journal array pattern, and
wherein the journal concatenating part
examines whether or not the journal array inputted matches the atypical journal array pattern and, if the journal array inputted matches the atypical journal array pattern, outputs part of the journal array inputted, to the journal analyzing part without the part of the inputted journal array being the objective for concatenating with another journal array.

4. The journal management system according to claim 3, which sets in a plurality of processing instances of the same processing procedure that occur in the application program, processing instance IDs indicating places in an occurrence order of the processing instances,
wherein the journal generating part
generates a journal describing a processing procedure ID and a processing instance ID, and
wherein the journal concatenating part
analyzes the journal array inputted, when the journal array inputted matches the atypical journal array pattern, and examines whether or not a processing instance with a processing procedure completed exists,
if the processing instance with the processing procedure completed exists as a consequence of analyzing the journal array inputted, extracts not less than one journal describing a processing instance ID indicating a place in the occurrence order subsequent to the processing instance with the processing procedure completed, from the journal array inputted, and
outputs the journal extracted, to the journal analyzing part without the extracted journal being the objective for concatenating with another journal array.

5. The journal management system according to claim 4,
wherein the journal generating part
for a processing procedure having m (m ≥ 2) pieces of branches, generates m pieces of completion journals indicating completion of the final step in each branch, for each processing instance, and
wherein the journal concatenating part,
if the journal array inputted matches the atypical journal array pattern and if m pieces of completion journals describing a common processing instance ID exist in the journal array inputted, determines that the processing procedure is completed in a processing instance corresponding to the processing instance ID.

6. The journal managing system according to claim 4,
wherein the journal concatenating part,
if the journal array inputted matches the atypical array pattern and a processing instance with a processing procedure completed does not exist as a consequence of analyzing the journal array inputted,
concatenates the journal array inputted, with another journal array generated for the common write destination change incidence ID, and outputs a journal array after concatenation to the journal analyzing part.

7. The journal managing system according to claim 4,
wherein the storage part stores a pattern of a journal array having
the first journal describing the first data-after change notice,
a start journal indicating completion of a processing of the initial step in the processing procedure and describing a processing instance ID representing the x-th place in the occurrence order, and
completion journals each indicating completion of a processing of the final step in the processing procedure and describing a processing instance ID representing the x-th place in the occurrence order, for the number of branches in the processing procedure,
as a restricted journal array pattern, and
wherein the journal concatenating part,
when the journal array inputted does not match the atypical journal array pattern, examines whether or not the journal array inputted matches the restricted journal array pattern, and if the journal array inputted matches the restricted journal array pattern,
extracts a processing instance ID corresponding to the processing instance ID representing the x-th place in the occurrence order, from the journal array inputted, and excludes a journal array describing a processing instance ID representing a place in the occurrence order preceding the processing instance ID extracted, from concatenation.

8. The journal managing system according to claim 4,
wherein the storage part stores a pattern of a journal array having
the first journal describing the first data-after change notice,
completion journals each indicating completion of a processing of the final step in the processing procedure and describing a processing instance ID representing the x-th place in the occurrence order, for the number of branches in the processing procedure, and
a start journal indicating completion of a processing of the initial step in the processing procedure and describing a processing instance ID representing the (x+1)th place in the occurrence order, the start journal existing between the first journal and the last completion journal of the processing instance ID representing the x-th place in the occurrence order, or immediately after the last completion journal,
as a restricted journal array pattern, and
wherein the journal concatenating part,
when the journal array inputted does not match the atypical journal array pattern, examines whether or not the journal array inputted matches the restricted journal array pattern, and if the journal array inputted matches the restricted journal array pattern,
extracts a processing instance ID corresponding to the processing instance ID representing the x-th place in the occurrence order, from the journal array inputted, and excludes a journal array describing a processing instance ID representing a place in the occurrence order preceding the processing instance ID extracted, from concatenation.

9. The journal managing system according to claim 4,
wherein the storage part stores a pattern of a journal array having
the first journal describing the first data-after change notice,
completion journals each indicating completion of a processing of the final step in the processing procedure and describing either one of a processing instance ID representing the x-th place in the occurrence order and a processing instance ID representing the (x-1)th place in the occurrence order, for the number of branches in the processing procedure, and
a start journal indicating completion of a processing of the initial step in the processing procedure and describing a processing instance ID representing the (x+1)th place in the occurrence order, the start journal existing between the first journal and the last completion journal of the processing instance ID representing the x-th place in the occurrence order, or immediately after the last completion journal,
as a restricted journal array pattern, and
wherein the journal concatenating part,
when the journal array inputted does not match the atypical journal array pattern, examines whether or not the journal array inputted matches the restricted journal array pattern, and if the journal array inputted matches the restricted journal array pattern,
extracts a processing instance ID corresponding to the processing instance ID representing the x-th place in the occurrence order, from the journal array inputted, and excludes a journal array describing a processing instance ID representing a place in the occurrence order preceding the processing instance ID extracted, from concatenation.
